(19) Europäisches Patentamt
European Patent Office
Office européen des brevets

(11) **EP 2 895 761 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **13762142.1**

(22) Anmeldetag: **16.09.2013**

(51) Int Cl.:
*F16D 55/226* (2006.01)      *F16D 65/18* (2006.01)
*F16D 65/56* (2006.01)

(86) Internationale Anmeldenummer:
**PCT/EP2013/069123**

(87) Internationale Veröffentlichungsnummer:
**WO 2014/041160 (20.03.2014 Gazette 2014/12)**

(54) **SCHEIBENBREMSE MIT EINER VERSCHLEISSNACHSTELLVORRICHTUNG, VERFAHREN UND VORRICHTUNG ZUM BETREIBEN EINER VERSCHLEISSNACHSTELLVORRICHTUNG EINER SCHEIBENBREMSE**

DISK BRAKE COMPRISING A WEAR ADJUSTMENT DEVICE, METHOD AND DEVICE FOR OPERATING A WEAR ADJUSTMENT DEVICE OF A DISK BRAKE

FREIN À DISQUE POURVU D'UN DISPOSITIF DE RATTRAPAGE D'USURE, PROCÉDÉ ET DISPOSITIF PERMETTANT DE FAIRE FONCTIONNER UN DISPOSITIF DE RATTRAPAGE D'USURE D'UN FREIN À DISQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2012 DE 102012108676**

(43) Veröffentlichungstag der Anmeldung:
**22.07.2015 Patentblatt 2015/30**

(73) Patentinhaber: **KNORR-BREMSE Systeme für Nutzfahrzeuge GmbH**
**80809 München (DE)**

(72) Erfinder:
• **ASEN, Alexander**
  **94428 Eichendorf (DE)**
• **BRANDL, Christian**
  **94447 Plattling (DE)**
• **KLINGNER, Matthias**
  **82272 Moorenweis (DE)**
• **PESCHEL, Michael**
  **82296 Schöngeising (DE)**
• **STÖGER, Christian**
  **94474 Vilshofen (DE)**
• **RGUICHI, Abdelaziz**
  **82140 Olching (DE)**

(56) Entgegenhaltungen:
EP-A1- 0 614 025      WO-A1-2006/032447
WO-A2-2007/111704      DE-A1-102008 035 366
US-A1- 2005 269 171

EP 2 895 761 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 2 895 761 B1**

**Beschreibung**

Die Erfindung betrifft eine Scheibenbremse mit einer Verschleißnachstellvorrichtung nach dem Oberbegriff des Anspruchs 1. Die Erfindung bezieht sich auch auf ein Verfahren und eine Vorrichtung zum Betreiben einer Verschleißnachstellvorrichtung einer Scheibenbremse, insbesondere für ein Kraftfahrzeug.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft über Gewindespindeln auf Bremsbeläge und Bremsscheibe übertragen, wobei über die Gewindespindeln der Verschleiß von Bremsscheibe und Bremsbelägen ausgeglichen wird.

Die Zuspannkräfte wirken über beide Bremsbeläge auf die Bremsscheibe. Da die Beläge konstruktiv als Verschleißteile ausgelegt werden, sind diese generell weicher als die Bremsscheibe, d.h. die Beläge erfahren über Ihre Gebrauchsdauer eine Änderung der Belagstärke, sie verschleißen. Auch die Bremsscheibe kann verschleißten. Aus diesem Verschleiß ergibt sich die Notwendigkeit, dass eine Verschleißnachstellung die Änderung durch den Verschleiß ausgleicht und somit ein konstantes Luftspiel einstellt. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Gegenwärtig sind mechanische als auch elektromotorische Nachstellmechanismen bekannt.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet. Das Luftspiel wird dabei kontinuierlich eingestellt.

Das Dokument EP 0 614 025 A1 beschreibt eine Nachstellvorrichtung für eine Scheibenbremse, insbesondere eine Gleitsattelscheibenbremse. Die Nachstellvorrichtung weist mindestens eine Druckspindel, die an einer Bremsbacke anliegt und in ein durch Drehen einer Zuspannwelle mit Druck in Richtung auf eine Bremsscheibe beaufschlagbares Druckstück eingeschraubt ist, sowie ein Getriebe zwischen der Zuspannwelle und der Druckspindel auf. Das Getriebe beinhaltet ein elastisches Element zur Drehkopplung von Zuspannwelle und Druckspindel.

Das Dokument US 2005/269171 A1 betrifft eine schnelle und schwingungsunempfindliche Nachstellvorrichtung für eine Scheibenbremse. Die Nachstellvorrichtung umfasst ein Vorspannungsglied, welches unabhängig von einem Druck ist, der auf einen Bremsbetätiger ausgeübt wird. Ein Verriegelungsglied verhindert eine Verstellung, wenn diese nicht erforderlich ist. Ein Lösen des Verriegelungsgliedes ermöglicht es dem Vorspannungsglied, eine Ruhestellung von Bremsbelägen unabhängig von einem von einem Fahrer auf ein Bremspedal aufgebrachten Bremsdruck einzustellen.

Das Dokument DE 10 2008 035366 A1 beschreibt eine Nachstellvorrichtung zur Nachstellung eines Verschleißes von Bremsbelägen und Bremsscheiben einer pneumatisch betätigten Scheibenbremse mit einer drehhebelbetätigten Zuspannvorrichtung, die vorzugsweise in eine Stellspindel der Scheibenbremse einsetzbar und an einem Bremssattel der Scheibenbremse mittels einer Lagerscheibe anbringbar ist, wobei axial auf einer Seite eines Antriebsrings ein Axiallager und axial auf der gegenüberliegenden Seite des Antriebsrings eine Kugelrampenkupplung mit Freilauffunktion ausgebildet ist, die Kugelrampenkupplung Kugeln, eine axial zwischen dem Axiallager und ihren Kugeln antriebsseitig angeordnete Antriebsbuchse und einen abtriebsseitigen Kupplungsring aufweist, eine Konuskupplung zwischen dem abtriebsseitigen Kupplungsring und einer Federhülse für eine Zylinderfeder angeordnet ist. Der abtriebsseitige Kupplungsring ist für einen durch zumindest einen feststehenden Anschlag begrenzten Arbeitsdrehwinkel ausgebildet. Es wird auch eine Scheibenbremse mit der Nachstellvorrichtung angegeben.

Bei mechanischen Nachstelleinrichtungen ist eine Nachstellgeschwindigkeit von der Übersetzung des Nachstellerantriebs abhängig. Aus Bauraumgründen ist jedoch eine große Übersetzung nicht immer möglich.

Es besteht ein ständiger Bedarf in der Fahrzeugtechnik, Gewicht und Kosten, z.B. bei Montage und Wartung, einzusparen, wobei gleichzeitig eine Einsparung an Energie, d.h. Kraftstoff, erfolgen soll.

Die Aufgabe der vorliegenden Erfindung besteht darin, eine verbesserte Scheibenbremse mit einer hohen Übersetzung zwischen einem Betätiger einer Nachstellvorrichtung und der Nachstellvorrichtung bereitzustellen.

Eine noch weitere Aufgabe ist es, ein Verfahren zum Steigern einer Nachstellgeschwindigkeit anzugeben.

Die Aufgabe wird durch eine Scheibenbremse mit den Merkmalen des Anspruchs 1 gelöst. Außerdem wird die Aufgabe durch ein Verfahren mit den Merkmalen des Anspruchs 15 gelöst.

Es wird eine Scheibenbremse mit einer Nachstellvorrichtung geschaffen, deren Antrieb mit einem Betätiger ausgestattet ist, der eine Betätigungskontur aufweist, die an dem Betätiger in einem Winkel angeordnet ist und mit einem Konturabschnitt eines Antriebselementes der Nachstelleinrichtung in Eingriff steht. Aufgrund dieses kompakten Aufbaus ergibt sich der Vorteil eine hohe Übersetzung zwischen Betätiger und Nachstelleinrichtung zu schaffen, woraus sich eine hohe Nachstellgeschwindigkeit ergibt.

Mit dem Begriff "Nachstellgeschwindigkeit" ist hier eine Geschwindigkeit gemeint, mit der ein aktuell zu großes Lüftspiel wieder auf das Soll-Lüftspiel eingestellt wird.

Eine erfindungsgemäße Scheibenbremse geht aus Anspruch 1 hervor. Mit dem erfindungsgemäßen Verfahren kann ohne Änderung mechanischer Komponenten eine Nachstellgeschwindigkeit deutlich erhöht werden.

Ein erfindungsgemäßes Verfahren zum Betreiben einer Verschleißnachstellvorrichtung einer Scheibenbremse geht aus den Merkmalen des Anspruchs 14 hervor. Weitere vorteilhafte Ausgestaltungen sind in den Unteransprüchen angegeben.

In einer Ausführung bilden der Betätiger und die Betätigungskontur eine L-förmige Gestalt, wobei der Winkel ungefähr 90° beträgt. Dadurch werden ein sehr kompakter Aufbau und ein einfacher Zusammenbau von Nachstelleinrichtung mit dem Antrieb ermöglicht. Außerdem kann eine maximale Übersetzung und damit eine hohe Nachstellgeschwindigkeit erreicht werden. Zusätzlich wird der Bauraum für Nachstellerkomponenten vergrößert.

In einer weiteren Ausführung ist der Betätiger als Hebel mit einem Hebelarm ausgebildet, welcher sich parallel zu der Nachstelleinrichtung von einer Schwenkachse der Zuspannvorrichtung zu dem Antriebselement der Nachstelleinrichtung erstreckt und dicht neben der Nachstelleinrichtung angeordnet ist, wobei die Betätigungskontur einen Hebelarm, welcher sich von dem Ende des Hebelarms zu einer Nachstellerachse der Nachstelleinrichtung erstreckt, aufweist. Auf diese Weise wird eine maximale Baulänge des Hebelarms des Betätigers ermöglicht, wobei gleichzeitig die Baulänge des Hebelarms der Betätigungskontur minimal ausgelegt werden kann.

Dabei ist es vorgesehen, dass der Hebelarm des Betätigers und der Hebelarm der Betätigungskontur ein Übersetzungsverhältnis i zwischen der Zuspannvorrichtung und der Nachstelleinrichtung in dem folgenden Zusammenhang $i = h1/h2$ bilden, wobei der eine Hebelarm mit einer maximalen Länge ausgelegt ist und der andere Hebelarm eine minimale Länge aufweist. Dadurch wird ein großes Übersetzungsverhältnis für eine gegenüber dem Stand der Technik gesteigerte Nachstellgeschwindigkeit ermöglicht.

In einer noch weiteren Ausführung umfasst die Nachstelleinrichtung das Antriebselement, an dem axial beiderseits jeweils eine Wälzkörperanordnung angeordnet ist, von denen eine als Wälzlager und eine als Kugelrampenkupplung mit einem Freilauf ausgebildet ist; ein mit der Kugelrampenkupplung gekoppeltes Druckelement, welches mit einem Abschnitt der Kugelrampenkupplung eine Überlastkupplung bildet; ein mit dem Druckelement gekoppeltes Abtriebselement zur Kopplung mit einem Koppelrad, welches für eine Kopplung mit der Spindeleinheit ausgebildet ist; ein Kraftspeicherelement zur Erzeugung einer Vorspannkraft der Kugelrampenkupplung und der Überlastkupplung; und einen Tragkörper, welcher an einem Ende mit einer Lagerscheibe verbunden ist und um welchen herum axial in Reihe mit der Lagerscheibe das Antriebselement, die Wälzkörperanordnungen, die Überlastkupplung, das Abtriebselement und das Kraftspeicherelement angeordnet sind, wobei das Kraftspeicherelement zwischen einem Auflageabschnitt des Tragkörpers und dem Druckelement angeordnet ist.

Es ergibt sich eine raumsparende, kompakte und leicht austauschbare Nachstelleinrichtung, welche einen kompakten Aufbau radial um einen Gewindestempel herum bietet. Nahezu alle ihre Funktionsbauteile umschließen den Gewindestempel mindestens zu einem Teil. In Zusammenwirkung mit dem oben beschriebenen Antriebe ergibt sich eine gesteigerte Nachstellgeschwindigkeit.

In einer Ausführung ist der Tragkörper der Nachstelleinrichtung in Hülsengestalt ausgebildet, wobei das Innere des Tragkörpers für eine Aufnahme eines Gewindestempels einer Spindeleinheit der zuzuordnenden Scheibenbremse ausgestaltet ist. Die Hülsengestalt ergibt eine Gewichts- und Werkstoffersparnis und außerdem die Möglichkeit, die Nachstelleinrichtung auf den Gewindestempel aufzusetzen.

Es ist vorgesehen, dass der Tragkörper einen Lagerabschnitt und einen Aufnahmeabschnitt aufweist, welche über eine Schulter verbunden sind, wobei der Lagerabschnitt einen geringeren Außendurchmesser als der Aufnahmeabschnitt aufweist. Dadurch ist es möglich, einen weitestgehend gleichmäßigen Außendurchmesser der Nachstelleinrichtung ohne große Abweichungen zu erhalten.

In weiterer Ausgestaltung ist vorgesehen, dass ein anderes Ende des Aufnahmeabschnitts als Auflageabschnitt für das Kraftspeicherelement ausgebildet ist. Aufgrund der Hülsengestalt lässt sich eine einfache Fertigung des Tragkörpers gestalten, wobei der Auflageabschnitt auch in einem Herstellgang erstellt werden kann.

Es ist weiterhin vorgesehen, dass auch das Abtriebselement in Hülsengestalt mit zwei zylindrischen Abschnitten ausgebildet ist, die sich ebenfalls leicht durch Umformung ohne zusätzliche spanende Bearbeitung anfertigen lassen. Außerdem ist vorgesehen, dass die zwei zylindrischen Abschnitte des Abtriebselementes unterschiedliche Durchmesser aufweisen und über einen Schulterabschnitt verbunden sind, wobei der eine zylindrische Abschnitt als Abtriebskopplungsabschnitt einen größeren Durchmesser aufweist als der andere zylindrische Abschnitt, der als Abtriebsabschnitt zur Kopplung mit dem Koppelrad ausgebildet ist. Somit ist es möglich, dass das Kraftspeicherelement zwischen dem Abtriebskopplungsabschnitt des Abtriebselementes und dem Tragkörper angeordnet ist. Gleichzeitig ermöglich die Ausgestaltung des Abtriebselementes eine Abdeckung und Schutz vor Verunreinigungen.

In einer noch weiteren Ausführung erstreckt sich der Abtriebsabschnitt des Abtriebselementes in einen Innenraum des Koppelrads steht und mit einem Innenprofil des Koppelrads über Übertragungselemente, vorzugsweise Kugeln, in Zusammenwirkung. Auf diese Weise ist ein einfaches Einstecken in und Herausziehen aus dem Koppelrad für Montage, Wartung und Austausch schnell möglich. Da das Koppelrad in weiterer Ausgestaltung auch gleichzeitig die Funktion eines Synchronrads einer Synchroneinrichtung beinhaltet, ist für die Montage-, Wartungs- und Austauscharbeiten keine Demontage der Synchroneinrichtung notwendig, was Zeit und Kosten einspart. Damit wird eine Entkopplung der Nachstelleinrichtung von der Synchroneinrichtung erreicht.

Außerdem ist das Koppelrad in noch weiterer Ausgestaltung mit einem Eingriffsabschnitt versehen, der zur drehfesten Zusammenwirkung mit einem Gewindestempel einer Spindeleinheit der zuzuordnenden Scheibenbremse vorgesehen ist. Der Eingriffsabschnitt kann z.B. Nocken aufweisen, die mit Axialnuten des zugehörigen Gewindestempels zusammenwirken. Damit ist nicht nur eine einfache Montage und Demontage gewährleistet, sondern auch eine relative axiale Verschiebbarkeit zwischen Koppelrad und Gewindestempel ermöglicht.

Wenn das Koppelrad in einer anderen Ausführung einen Synchronabschnitt aufweist, welcher zur Kopplung mit einem Synchronmittel einer Synchroneinrichtung der zuzuordnenden Scheibenbremse vorgesehen ist, ergibt sich Vorteil einer großen Funktionalität des Koppelrades. Der Synchronabschnitt kann z.B. eine Kettenverzahnung sein, und das Synchronmittel eine Kette.

In einer anderen Ausführung weist das Antriebselement einen Konturabschnitt auf, der zur Zusammenwirkung mit einer Betätigungskontur eines Betätigers der Zuspannvorrichtung, vorzugsweise eines Bremsdrehhebels der zuzuordnenden Scheibenbremse ausgebildet ist. Beispielsweise kann der Konturabschnitt eine Verzahnung sein, die umlaufend gestaltet ist, so dass eine einfache Ausrichtung zwischen Betätiger und Antriebselement ermöglicht wird.

In weiterer Ausführung ist vorgesehen, dass ein Rampenring der Kugelrampenkupplung und das Antriebselement mittels eines elastischen Kopplungselementes, vorzugsweise eine Schlingfeder, gekoppelt sind. Auf diese Weise können die Rampenkugeln in den Kugelrampen der Kugelrampenkupplung in einer bestimmten Position stehen bzw. in eine solche gestellt werden. Außerdem kann somit eine Spielverringerung des Freilaufs ermöglicht werden.

In einer weiteren Ausführung des Verfahrens ist vorgesehen, dass im Verfahrensschritt (S3) eine Zuspannkraft der Scheibenbremse derart gewählt wird, dass die Ansprechkraft der Scheibenbremse gerade erreicht wird. Damit ist es möglich, dass die Bremse mehrfach hintereinander zugespannt werden kann, ohne dass eine Bremsung erfolgt, wobei aber eine Nachstellung durchgeführt wird.

In einer noch weiteren Ausführung wird der Verfahrensschritt (S3) schon beim Lösen der Scheibenbremse während des Bremsvorgangs, in dem der erste Verfahrensschritt (S1) durchgeführt worden ist, durchgeführt. Damit ist eine weitere Steigerung der Nachstellgeschwindigkeit möglich.

In einer anderen Ausführung ist es vorgesehen, dass das Abschätzen eines Verschleißes der Bremsbeläge und der Bremsscheibe der Scheibenbremse im Verfahrensschritt (S1) mittels eines Schätzverfahrens durchgeführt wird. Ein solches Schätzverfahren kann z.B. mittels schnell ermittelbarer Werte aus den Parametern Verschleißwerte aus vorher gespeicherten Tabellen verwenden, wodurch eine schnelle Durchführung ermöglicht wird. Alternativ oder zusätzlich kann das Schätzverfahren mit einem Algorithmus durchgeführt werden.

In einer noch anderen Ausführung ist die Scheibenbremse die oben beschriebene Scheibenbremse.

Durch eine Steigerung der Nachstellgeschwindigkeit wird ein Soll-Lüftspiel der Scheibenbremse schnell erreicht. Außerdem wird Energie, z.B. Druckluft, eingespart, die zur Betätigung der Bremse bei zu großem Lüftspiel zur Überwindung des zu großen Lüftspiels benötigt wird. Diese Energieeinsparung führt zu geringerem Kraftstoffverbrauch.

Es ergibt sich somit eine maximale Bremsperformance auch nach hoher Belastung der Scheibenbremse.

Weiterhin sind kurze Ansprechzeiten der Bremse ermöglicht.

Bei Bremsen einer Achse ergibt sich eine Verringerung der Bremsmomentabweichung.

Die Erfindung wird nun anhand beispielhafter Ausführungen mit Bezug auf die beigefügten Zeichnungen näher erläutert. Hierbei zeigen:

Fig. 1        eine schematische Ansicht eines Ausführungsbeispiels einer erfindungsgemäßen Vorrichtung und eine schematische Draufsicht einer erfindungsgemäßen Scheibenbremse mit einem Ausführungsbeispiel einer Verschleißnachstellvorrichtung;

Fig. 2        eine schematische Teilschnittansicht der erfindungsgemäßen Scheibenbremse nach Fig. 1;

Fig. 3        eine schematische Ansicht einer Variante der erfindungsgemäßen Scheibenbremse nach Fig. 1 von der Zuspannseite her;

Fig. 4 und 4a        schematische Schnittansichten der Variante der erfindungsgemäßen Scheibenbremse längs der Linie A-A nach Fig. 2 in verschiedenen Verschleißzuständen;

Fig. 5 und 5a        schematische Schnittansichten der Variante der erfindungsgemäßen Scheibenbremse längs der Linie B-B nach Fig. 2 in verschiedenen Verschleißzuständen;

Fig. 6            eine vergrößerte Schnittansicht eines Ausführungsbeispiels einer Nachstelleinrichtung der Verschleißnachstellvorrichtung nach Fig. 4;

Fig. 7            die Nachstelleinrichtung nach Fig. 6 im eingebauten Zustand;

Fig. 8            eine schematische Perspektivansicht eines Bremsdrehhebels mit Betätiger;

Fig. 9            ein schematisches Blockschaltbild eines Ausführungsbeispiels einer Steuereinrichtung; und

Fig. 10 und 11       schematische Flussdiagramme eines Ausführungsbeispiels eines erfindungsgemäßen Verfahrens.

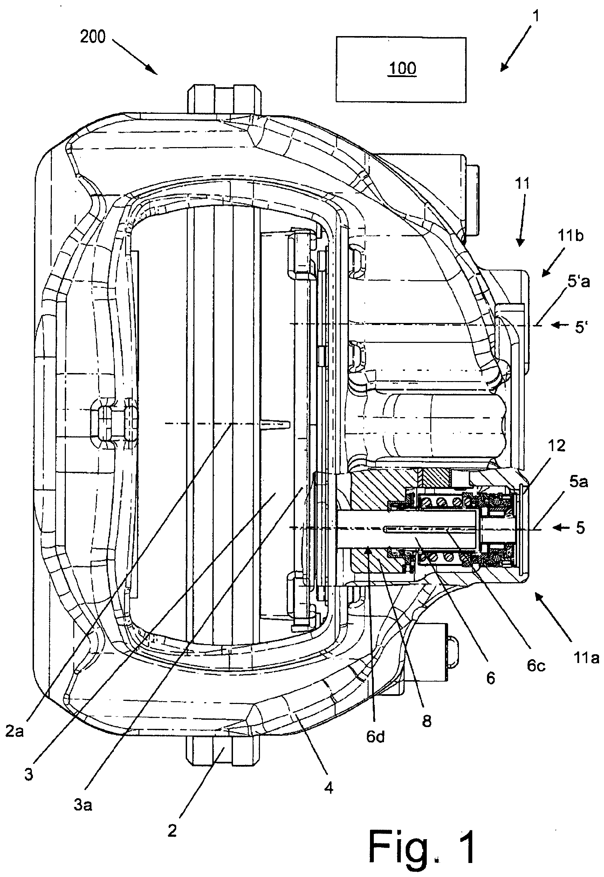

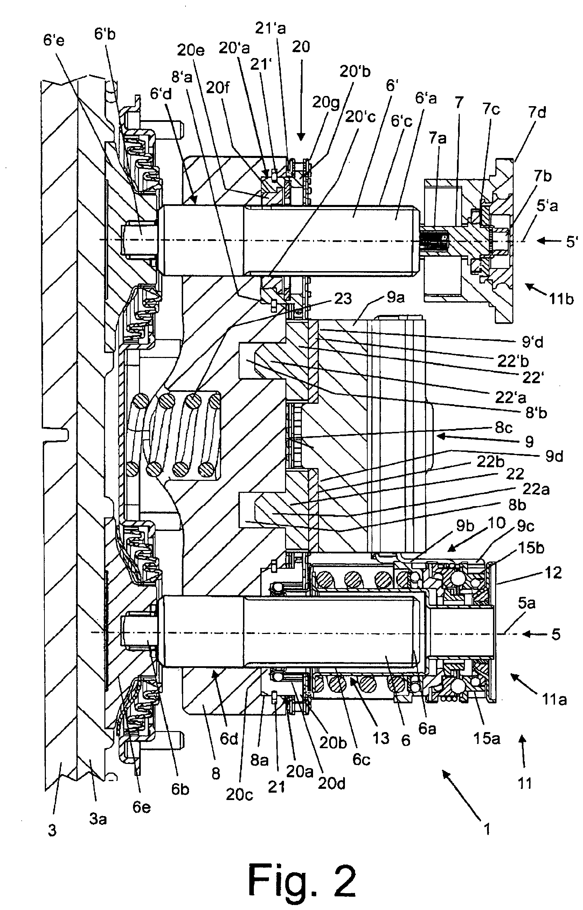

In Fig. 1 ist eine schematische Ansicht eines Ausführungsbeispiels einer erfindungsgemäßen Vorrichtung 200 und eine schematische Draufsicht einer erfindungsgemäßen Scheibenbremse 1 mit einem Ausführungsbeispiel einer Verschleißnachstellvorrichtung 11 dargestellt. Fig. 2 zeigt eine schematische Teilschnittansicht der erfindungsgemäßen Scheibenbremse 1 nach Fig. 1.

Die Vorrichtung 200 zur Durchführung eines erfindungsgemäßen Verfahrens zum Steigern einer Nachstellgeschwindigkeit der Scheibenbremse 1 umfasst die Scheibenbremse 1 und eine Steuereinrichtung 100.

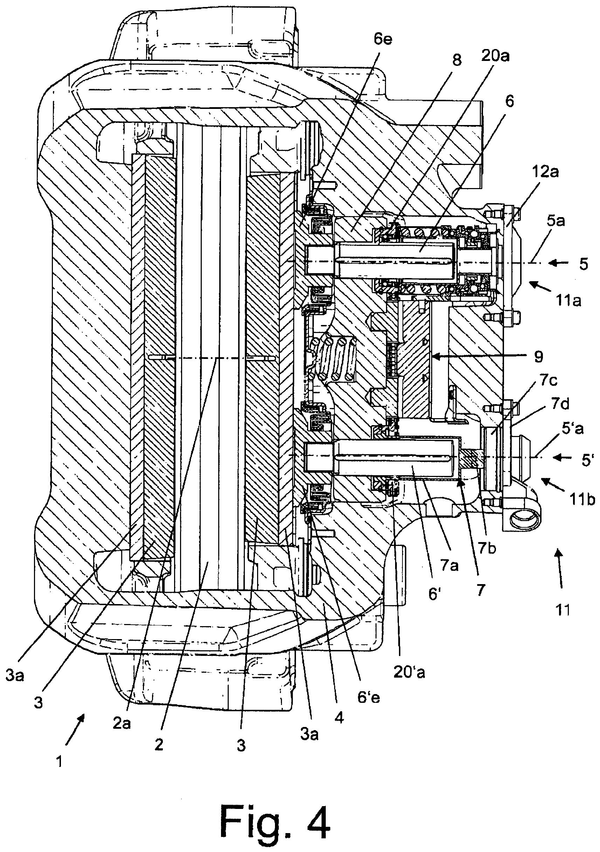

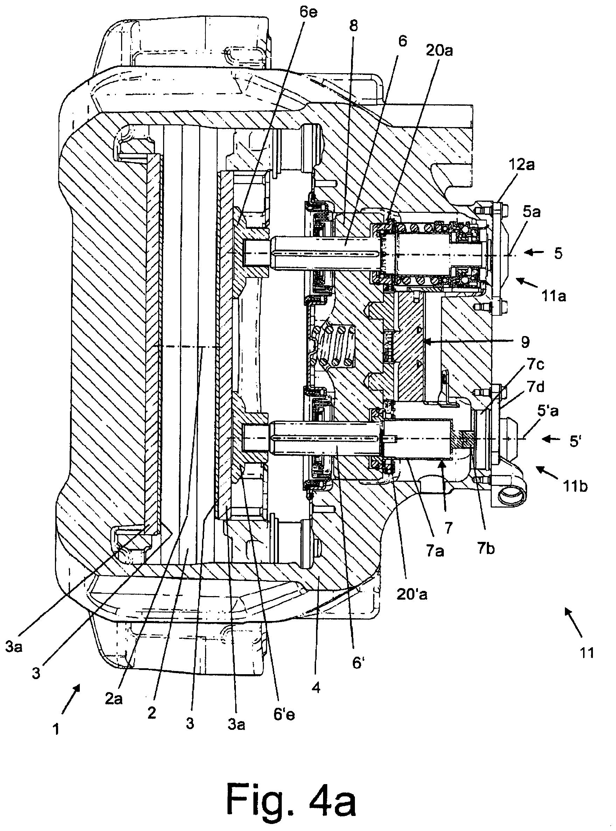

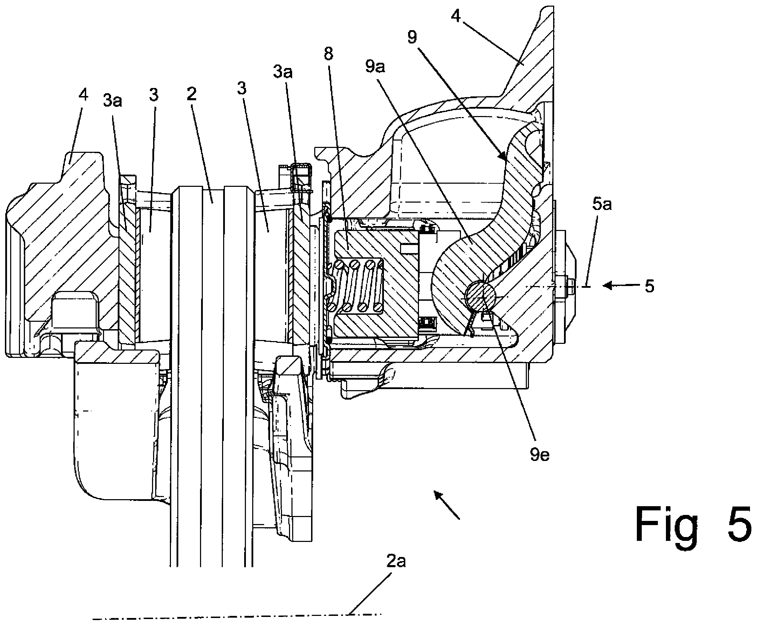

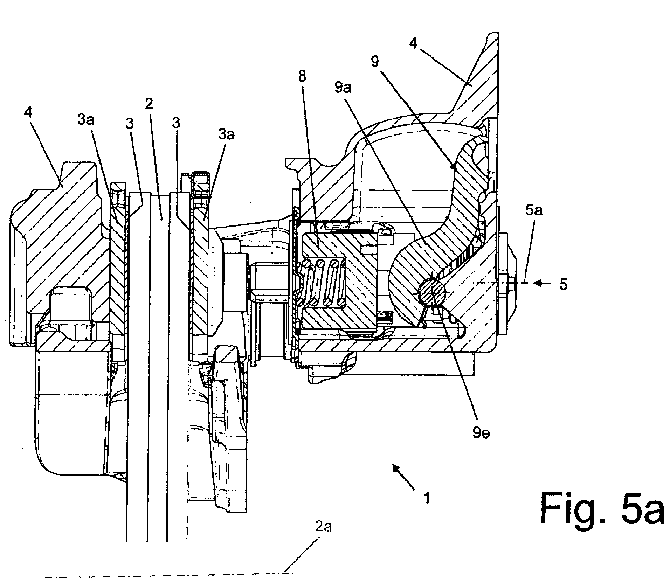

Die Scheibenbremse 1 weist eine Bremsscheibe 2 mit einer Bremsscheibenachse 2a auf. Die Bremsscheibe 2 ist von einem, hier als Schwimmsattel ausgeführten, Bremssattel 4 übergriffen. Beiderseits der Bremsscheibe 2 ist ein Bremsbelag 3 mit jeweils einem Bremsbelagträger 3a angeordnet, wobei hier nur der zuspannseitige Bremsbelag 3 mit seinem Bremsbelagträger 3a gezeigt ist. Der reaktionsseitige Bremsbelag ist hier nicht dargestellt, aber leicht vorstellbar und außerdem weiter unten in Fig. 4, 4a, 5, 5a gezeigt. In diesem Ausführungsbeispiel ist die Scheibenbremse 1 als zweistempelige Bremse mit zwei Spindeleinheiten 5 und 5' ausgebildet. Jede Spindeleinheit 5, 5' weist einen Gewindestempel 6, 6' auf, der als Vollwelle ausgebildet ist.

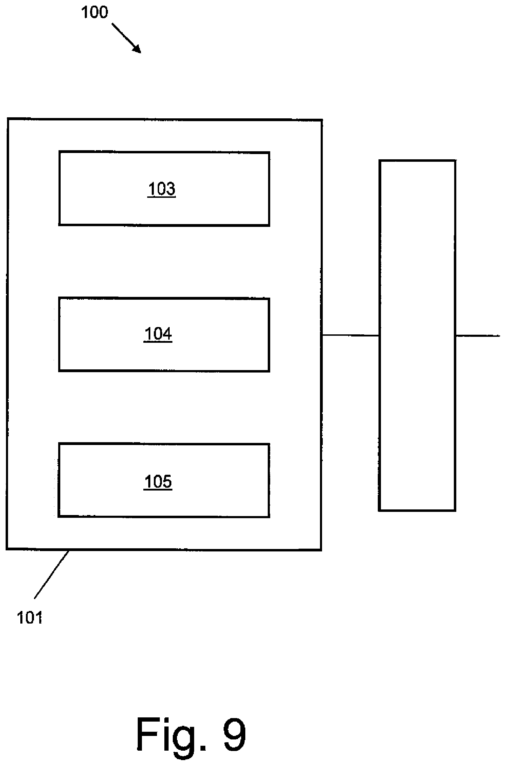

Die Steuereinrichtung 100 wird unten noch näher im Zusammenhang mit Fig. 9 und mit dem erfindungsgemäßen Verfahren erläutert.

Der zuspannseitige Bremsbelagträger 3a steht mit den Spindeleinheiten 5, 5' über Druckstücke 6e, 6'e, die an Enden der Gewindestempeln 6, 6' angeordnet sind, in Verbindung. Der andere, reaktionsseitige Bremsbelagträger 3a ist auf der anderen Seite der Bremsscheibe im Bremssattel 4 festgelegt, was z.B. aus den Figuren 4, 4a, 5 und 5a hervorgeht. Die Gewindestempel 6, 6' sind jeweils in einer Traverse 8, die auch als Brücke bezeichnet wird, in Gewinden 6d, 6'd verdrehbar angeordnet.

Die Gewindestempel 6, 6' weisen jeweils ein zuspannseitiges Ende 6a, 6'a und ein belagseitiges Ende 6b, 6b', das mit dem Druckstück 6e, 6'e in Verbindung steht und hier zapfenförmig ist, auf. Weiterhin sind die Gewindestempel 6, 6' jeweils mit einer Anzahl von Axialnuten 6c, 6'c versehen, welche sich in diesem Ausführungsbeispiel jeweils von dem zuspannseitigen Ende 6a, 6'a über etwa zwei Drittel der Länge des jeweiligen Gewindestempels 6, 6' in Richtung auf das jeweilige belagseitige Ende 6b, 6'b am jeweiligen Umfang des Gewindestempels 6, 6' in dessen Längsrichtung erstrecken. Fast die gesamte Länge des Gewindestempels 6, 6' bis auf die zapfenartigen Wellenenden 6b, 6'b ist mit einem Gewinde 6d, 6'd, d.h. Außengewinde, versehen. Die Gewindestempel 6, 6' sind mit ihren Gewinden 6d, 6'd in entsprechende Gewindebohrungen der Traverse 8 eingeschraubt.

Das Gewinde 6d, 6'd als Außengewinde an den Gewindestempel 6, 6' und als korrespondierendes Innengewinde in der Traverse 8 ist hier mit einer Steigung im Bereich der Selbsthemmung ausgeführt. Durch die Drehbewegung der Gewindestempel 6, 6' in der Traverse 8 ändert sich die Axialposition der Gewindestempel 6, 6' relativ zu der Traverse 8. Mit dem Begriff Axialposition ist hier eine Position der Gewindestempel 6, 6' in Axialrichtung der Bremsscheibenachse 2a und der Achsen 5a, 5'a gemeint.

Die Traverse 8 und somit die Gewindestempel 6, 6' sind von einer Zuspannvorrichtung, hier ein Bremsdrehhebel 9 mit einer Schwenkachse 9e (siehe Fig. 5, 5a) rechtwinklig zu der Bremsscheibenachse 2a (siehe Fig. 5, 5a) der Bremsscheibe 2 betätigbar. Der Bremsdrehhebel 9 weist einen Hebelkörper 9a auf, welcher hier über zwei Lagerabschnitte 9c, 9'c über jeweils einen Lagerbock 22, 22' mit der Traverse 8 in Zusammenwirkung steht. Dabei ist jeder Lagerbock 22, 22' mit einem Zentrieransatz 22a, 22'a versehen, welcher in der Traverse 8 in jeweils einer Aufnahme 8b, 8'b eingesetzt ist. Hier ist jeder Zentrieransatz 22a, 22'a zapfenförmig ausgebildet. Dabei ist jede Aufnahme 8b, 8b' zum Bremsdrehhebel 9 hin geöffnet und in ihrer Länge parallel zu einer Längserstreckung der Traverse 8 größer als die Länge eines Zentrieransatzes 22a, 22'a eines Lagerbocks 22, 22'. Jeder Lagerbock 22, 22' steht über ein Schwenklager 22b, 22'b mit dem zugeordneten Lagerabschnitt 9c, 9'c des Bremsdrehhebels 9 in Wirkverbindung.

Die Traverse 8 ist in Richtung der Bremsscheibenachse 2a durch den Bremsdrehhebel 9 verstellbar. Eine Bewegung auf die Bremsscheibe 2 zu wird als Zuspannbewegung bezeichnet, und eine Bewegung in Gegenrichtung wird Lösebewegung genannt. Eine zuspannseitige Seite der Traverse 8 wird hier als Traversenoberseite 8c bezeichnet. Eine nicht weiter erläuterte Rückstellfeder 23 ist in der Mitte der Traverse 8 in einer entsprechenden Ausnehmung auf der belagseitigen Seite der Traverse 8 aufgenommen und stützt sich am Bremssattel 4 ab. Mittels der Rückstellfeder 23 wird die Traverse 8 bei der Lösebewegung in die in Fig. 1 gezeigt gelöste Stellung der Scheibenbremse 1 verstellt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 9, vergrößert ist (siehe auch Fig. 4a und 5a).

Die Scheibenbremse 1 kann unterschiedliche Kraftantriebe aufweisen. Der Drehhebel 9 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die erfindungsgemäße Verschleißnachstellvorrichtung 11 ist zur Verschleißnachstellung eines vorher festgelegten Lüftspiels, das als Nominallüftspiel bezeichnet wird, ausgebildet. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Verschleißnachstellvorrichtung 11 verkleinert ein vorhandenes Lüftspiel, wenn dieses in Bezug auf das vorher festgelegte Lüftspiel zu groß ist.

Die Verschleißnachstellvorrichtung 11 umfasst hier eine Nachstelleinrichtung 11a und eine Mitnehmereinrichtung 11b. Die Nachstelleinrichtung 11a ist an der einen Spindeleinheit 5 koaxial zu dieser, zu deren Gewindestempel 6 und einer Nachstellerachse 5a angeordnet. Die Bauteile und Funktionsgruppen der Nachstelleinrichtung 11a, welche unten noch ausführlich erläutert werden, sind auf einem Tragkörper 13 um diesen herum in axialer Richtung und somit in Richtung der Nachstellerachse 5a angeordnet. Dabei überdeckt die Nachstelleinrichtung 11a das zuspannseitige Ende 6a des zugehörigen Gewindestempels 6 und erstreckt sich zum belagseitigen Ende 6b des zugehörigen Gewindestempels 6 über ungefähr neun Zehntel der gesamten Länge der Axialnuten 6c des zugehörigen Gewindestempels 6 und ist in diesem Bereich um den Gewindestempel 6 herum angeordnet. Mit anderen Worten, die Nachstelleinrichtung 11a ist konzentrisch zu dem zugehörigen Gewindestempel 6 angeordnet und umschließt diesen zumindest teilweise. Außerdem ist ein weiterer Teil der Nachstelleinrichtung 11a in Verlängerung des zuspannseitigen Endes 6a des zugehörigen Gewindestempels 6 bis zu einer Lagerscheibe 12 angeordnet. Dieser letztere Bereich macht ungefähr ein Drittel der gesamten Länge in Richtung der Nachstellerachse 5a der Nachstelleinrichtung 11a aus. Mittels der nicht näher beschriebenen Lagerscheibe 12 ist die Nachstelleinrichtung 11a im Bremssattel 4 abgestützt bzw. eingesetzt.

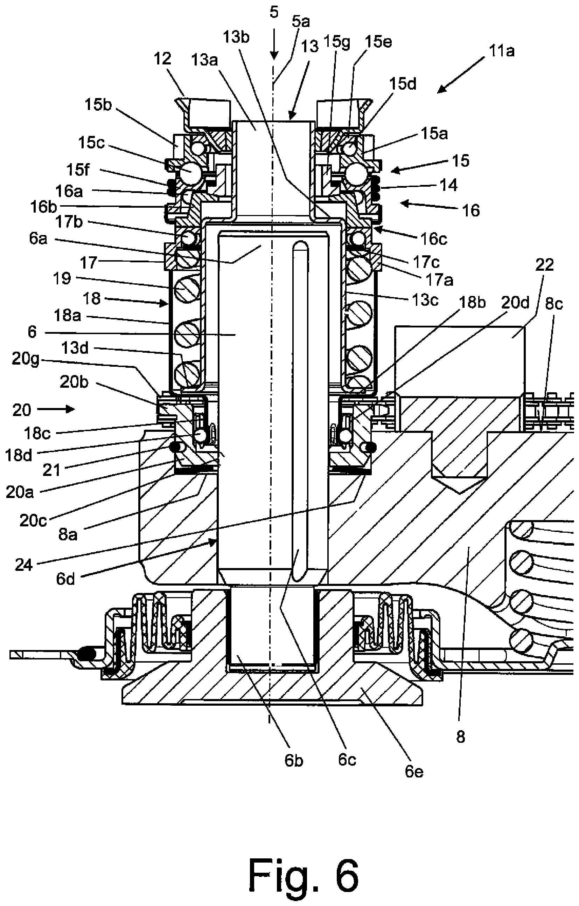

Die Nachstelleinrichtung 11a wird unten im Detail im Zusammenhang mit Fig. 6 noch weiter beschrieben.

Die Mitnehmereinrichtung 11b ist koaxial zu der anderen Spindeleinheit 5', zu deren Gewindestempel 6' und einer Mitnehmerachse 5'a angeordnet. Im Gegensatz zu dem Gewindestempel 6 der Nachstelleinrichtung 11a ist das zuspannseitige Ende 6'a des Gewindestempels 6' der Mitnehmereinrichtung 11b in diesem Ausführungsbeispiel mit einem Profilansatz ausgebildet, auf welchem ein Aufsatz 7 mit einem Aufsatzabschnitt 7a drehfest aufgesetzt ist. Das andere, zuspannseitige Ende des Aufsatzes 7 ist als ein Betätigungsende 7b mit einem weiteren Profil zum Ansatz eines Werkzeugs zur Verstellung der Verschleißnachstellvorrichtung 11 bei Wartungsarbeiten ausgebildet. Um den Aufsatz 7 herum ist ein nicht näher erläutertes Einsatzteil in Form eines Einbaugehäuses 7d zum Einsatz und zur Befestigung im Bremssattel 4 angeordnet und mit der Mitnehmereinrichtung 11b entsprechend verbunden bzw. bildet für diese eine Lagerung. Innerhalb des Einbaugehäuses 7d ist ein nicht näher beschriebener Sensor 7c eingebaut, welcher über den Aufsatz 7 mit dem Gewindestempel 6' drehfest gekoppelt ist. Ein Aufnehmerelement des Sensors kann z.B. ein Winkelsensor sein, z.B. ein Potentiometer, und erfasst die Winkellage des Gewindestempels 6' um die Mitnehmerachse 5'a. Die Auswertung dieser Winkellage lässt einen Rückschluss auf den Verschleißzustand der Bremsbeläge 3 und der Bremsscheibe 2 zu, denn der Gewindestempel 6' ist über eine unten noch näher erläuterte Synchroneinrichtung 20 mit dem Gewindestempel 6 gekoppelt. So dient der Sensor 7c zur Erfassung eines Nachstellwegs, d.h. des Verschleißzustands, und ist über nicht gezeigte Kabel (elektrisch oder optisch leitend) mit der Steuereinrichtung 100, welche die Auswertung vornehmen kann, verbunden.

Die Nachstellerachse 5a, die Mitnehmerachse 5'a und die Bremsscheibenachse 2a sind parallel zueinander angeordnet.

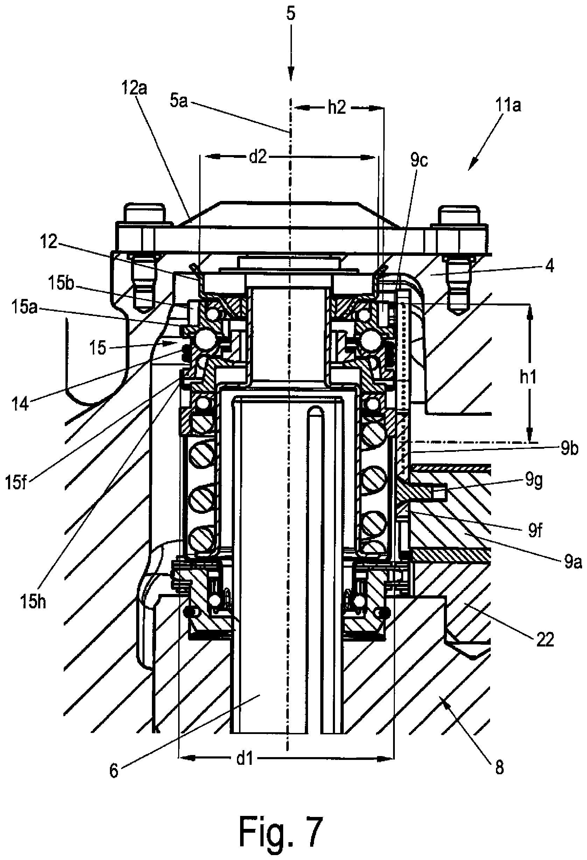

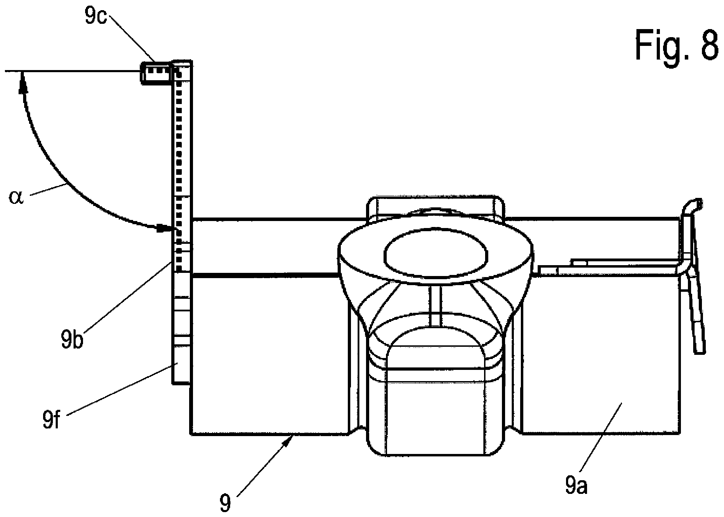

Die Nachstelleinrichtung 11a der Verschleißnachstellvorrichtung 11 steht über einen Antrieb 10 mit dem Drehhebel 9 in Zusammenwirkung. Der Antrieb 10 umfasst einen Betätiger 9b, welcher mit dem Bremsdrehhebel 9 verbunden ist, und ein Antriebselement 15a der Nachstelleinrichtung 11a. Der Betätiger 9b ist an seinem zuspannseitigen Ende mit einer Betätigungskontur 9c versehen, welche z.B. zahnförmig ist und mit einem Konturabschnitt 15b des Antriebselementes 15a der Nachstelleinrichtung 11a in Eingriff steht. Der Konturabschnitt 15b des Antriebselementes 15a korrespondiert mit der Betätigungskontur 9c des Betätigers 9b. Der Bremsdrehhebel 9 und der Betätiger 9b werden weiter unten im Zusammenhang mit Fig. 7 und 8 noch ausführlich beschrieben.

In unbetätigter Stellung, d.h. in Lösestellung, ist zwischen der Betätigungskontur 9c des Betätigers 9b und dem Konturabschnitt 15b des Antriebselementes 15a der Nachstelleinrichtung 11a ein Spiel vorgesehen. Dieses Spiel repräsentiert unter Berücksichtigung der Übersetzungsverhältnisse am Bremsdrehhebel 9 das konstruktive Lüftspiel der Scheibenbremse 1. Mit anderen Worten, eine Betätigung der Nachstelleinrichtung 11a erfolgt erst, nachdem die Traverse 8 bei einer Zuspannung der Scheibenbremse 1, d.h. bei Bremsbetätigung, um einen größeren Weg als das konstruktive Lüftspiel auf die Bremsscheibe 2 hin verschoben worden ist.

Die Nachstelleinrichtung 11a und die Mitnehmereinrichtung 11b sind durch die Synchroneinrichtung 20 derart gekoppelt, dass eine Verdrehbewegung des Gewindestempels 6 um die Nachstellerachse 5a eine entsprechende Verdrehbewegung des Gewindestempels 6' um die Mitnehmerachse 5'a bewirkt und umgekehrt. Die Synchroneinrichtung 20 ist hier auf der Traversenoberseite 8c der Traverse 8 zwischen der Traverse 8 und dem Bremsdrehhebel 9 angeordnet und umfasst ein Koppelrad 20a, das mit dem Gewindestempel 6 der einen Spindeleinheit 5 und mit der Nachstelleinrichtung 11a gekoppelt ist, ein weiteres Koppelrad 20'a, das mit der Gewindestempel 6' der anderen Spindeleinheit 5' und mit der Mitnehmereinrichtung 11b gekoppelt ist, und ein Synchronmittel 20g, mit welchem die Koppelräder 20a und 20'a gekoppelt sind. Das Synchronmittel 20g kann beispielsweise aus einem Wälzgetriebe mit Zahnrädern bestehen. Es sind natürlich auch andere Ausführungen möglich. In diesem Ausführungsbeispiel ist das Synchronmittel 20g ein Zugmittel, vorzugsweise eine Kette. So sind in diesem Ausführungsbeispiel die Koppelräder 20a, 20'a Kettenräder und das Synchronmittel 20g eine Kette. Damit ist eine synchrone Bewegung der Gewindestempel 6, 6' der Spindeleinheiten 5 und 5' bei Verschleißnachstellvorgängen (Antrieb durch die Nachstelleinrichtung 11a) und Einstellungen bei Wartungsarbeiten, z.B. Belagwechsel, (manueller Antrieb über das Betätigungsende 7b der Mitnehmereinrichtung 11b) gewährleistet.

Jedes Koppelrad 20a, 20'a ist ortsfest in einer mit dem jeweils zugeordneten Koppelrad 20a, 20'a korrespondierenden Aufnahme 8a, 8'a in der Traverse 8 drehbar aufgenommen. Die Aufnahmen 8a, 8'a weisen hier mit ihren Öffnungen zur Zuspannseite der Scheibenbremse 1, d.h. sie sind von der Traversenoberseite 8c in die Traverse 8 eingeformt.

Jedes Koppelrad 20a, 20'a weist einen Körper auf, der zuspannseitig hohlzylinderförmig ausgebildet ist. An dem zuspannseitigen Endumfang ist jeweils ein Synchronabschnitt 20b, 20'b angeformt, der in diesem Ausführungsbeispiel eine Verzahnung für einen Kette als Synchronmittel 20f ausgebildet ist. Der Synchronabschnitt 20b, 20'b (hier der Zahnkranz des Kettenrads) ist von dem Synchronmittel 20f, der Kette, in einem Winkel von ungefähr 180° umschlungen und steht mit diesem in Eingriff.

Zunächst wird das Koppelrad 20a, das der Spindeleinheit 5 mit der Nachstelleinrichtung 11a zugeordnet ist, beschrieben. Der hohlzylinderförmige Körper des Koppelrads 20a ist an seiner Innenwand mit einem sich axial erstreckenden Innenprofil 20d (siehe auch Fig. 6) ausgebildet, welches mit dem belagseitigen Ende der Nachstelleinrichtung 11a zusammenwirkt, was unten im Zusammenhang mit Fig. 6 noch näher beschrieben wird. Das belagseitige Ende des hohlzylinderförmigen Körpers des Koppelrads 20a ist mit einem innen liegenden Eingriffsabschnitt 20c versehen, welcher hier Nocken aufweist, die mit den Axialnuten 6c des zugehörigen Gewindestempels 6 korrespondieren und mit diesen in Eingriff stehen. Der hohlzylinderförmige Körper des Koppelrads 20a ist hier zu etwa zwei Drittel in der zugehörigen Ausnehmung 8a der Traverse 8 aufgenommen, wobei der Außendurchmesser des hohlzylinderförmigen Körpers des Koppelrads 20a mit dem Innendurchmesser der Ausnehmung 8a der Traverse 8 korrespondiert. Eine axiale Festlegung des hohlzylinderförmigen Körpers des Koppelrads 20a und somit des Koppelrads 20a selbst in der Ausnehmung 8a der Traverse 8 ist hier durch ein Sicherungselement 21, z.B. ein Seegerring, realisiert. Das Sicherungselement 21 ist in einer radialen Nut in der Ausnehmung 8a festgelegt.

Auch das Koppelrad 20'a, das mit dem Gewindestempel 6' der anderen Spindeleinheit 5' mit der Mitnehmereinrichtung 11b gekoppelt ist, weist einen ähnlichen hohlzylinderförmigen Körper wie das Koppelrad 20a auf. Im Unterschied zu dem Koppelrad 20a ist in diesen hohlzylinderförmigen Körper des Koppelrads 20'a ein ringförmiges Einsatzelement 20e, welches auch als Synchronisationsring bezeichnet wird, eingesetzt, über ein nicht näher beschriebenes Sicherungselement 21' axial und über eine nicht näher gezeigte Profilierung, beispielsweise eine Kerbverzahnung mit entsprechend feiner Verzahnung, radial in dem hohlzylinderförmigen Körper des Koppelrads 20'a festgelegt. Aufgrund der radialen Profilfestlegung des Einsatzelementes 20e kann eine Einstellung der Synchroneinrichtung 20 erfolgen. Wenn bei der Montage der Scheibenbremse 1 beide Gewindestempel 6, 6' in die gleiche Axialposition relativ zur Traverse 8 bewegt worden sind, wird das Einsatzelement 20e als Synchronisationsring in das Koppelrad 20'a eingesetzt. Das Einsatzelement 20e weist den Eingriffsabschnitts 20'c zum Eingriff in den Axialnuten 6'c des zugehörigen Gewindestempels 6' auf.

Die Eingriffsabschnitte 20c, 20'c ermöglichen eine drehfeste Kopplung der Koppelräder 20a, 20'a mit den zugehörigen Gewindestempels 6, 6' der Spindeleinheiten 5, 5'. Gleichzeitig wird durch die Axialnuten 6c, 6'c erreicht, dass die mit ihnen in Eingriff stehenden Nocken der Eingriffsabschnitte 20c, 20'c in den Axialnuten 20c, 20'c in Richtung der Nachstellerachse 5a bzw. der Mitnehmerachse 5'a axial verschiebbar geführt sind. Auf diese Weise wird eine axiale Verstellung der Gewindestempel 6, 6' bei Nachstellung relativ zu der Traverse 8 aufgrund der Gewinde 6d, 6'd nicht behindert.

Das Synchronmittel 20f, hier die Kette, der auf der Traverse 8 angeordneten Synchroneinrichtung 20 ist auf der Oberseite 8c der Traverse 8 angeordnet und geführt, wobei das Synchronmittel in Längsrichtung der Traverse 8 an den Längsseiten der Lagerböcke 22, 22' ebenfalls geführt und in Richtung der Drehachse der Bremsscheibe 2 gehalten ist.

Die Kopplung des Koppelrads 20a mit der Nachstelleinrichtung 11a wird im Zusammenhang mit Fig. 6 noch weiter erläutert.

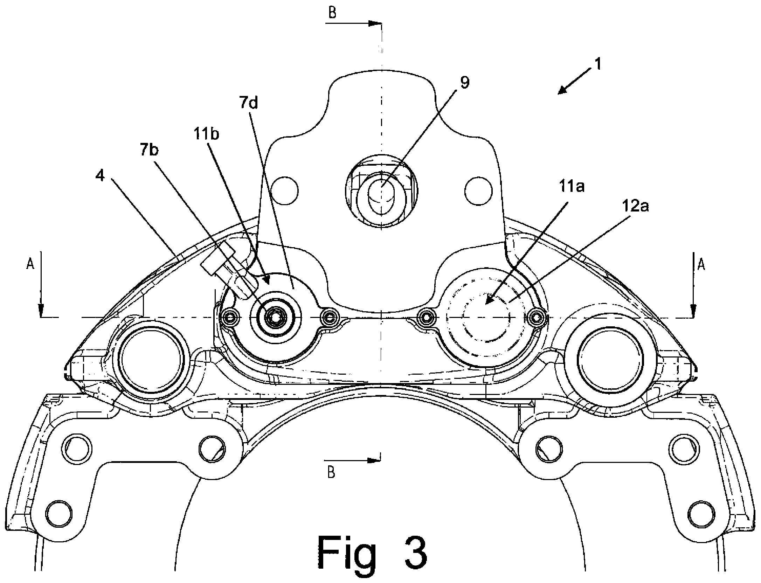

Fig. 3 zeigt eine schematische Ansicht einer Variante der erfindungsgemäßen Scheibenbremse 1 nach Fig. 1 von der Zuspannseite her. Fig. 4 und 4a stellen schematische Schnittansichten der Variante der erfindungsgemäßen Scheibenbremse 1 längs der Linie A-A nach Fig. 2 in verschiedenen Verschleißzuständen der Scheibenbremse 1 dar. Und Fig. 5-5a zeigen schematische Schnittansichten der Variante der erfindungsgemäßen Scheibenbremse 1 längs der Linie B-B nach Fig. 2 in verschiedenen Verschleißzuständen.

In Fig. 4 und Fig. 5 ist die Scheibenbremse 1 in einem Verschleißzustand gezeigt, in welchem die Bremsbeläge 3 und die Bremsscheibe 2 neu oder nur wenig verschlissen sind. Im Gegensatz dazu zeigen Fig. 4a und Fig. 5a einen hohen Verschleißzustand der Bremsbeläge 3 und der Bremsscheibe 2. Dabei ist eine Nachstellung durch die Verschleißnachstellvorrichtung 11 eindeutig zu erkennen, wobei die Gewindestempel 6, 6' zu mehr als zwei Drittel ihrer Länge belagseitig aus der Traverse 8 herausgeschraubt sind.

In Fig. 3 ist die Zuspannseite der Scheibenbremse 1 gezeigt, wobei in dieser Variante die Nachstelleinrichtung 11a rechts und die Mitnehmereinrichtung 11b links in der Zeichnung angeordnet ist. An der Mitnehmereinrichtung 11b ist eine Kabeleinführung für das Kabel des Sensors 7c zu erkennen, die nicht näher beschrieben wird. Die Erzeugung der Zuspannkraft erfolgt über den Bremsdrehhebel 9, der als Exzenterhebel ausgebildet ist. An der gezeigten Zuspannseite des Bremssattels 4 ist ein nicht näher bezeichneter Anschlussflansch z.B. für einen Pneumatikzylinder zu erkennen, welcher mit einem längeren von zwei Hebelarmen des Bremsdrehhebels 9 zusammenwirkt. Die Hebelarme sind nicht näher bezeichnet, aber leicht vorstellbar. Dies ist in den Figuren 5 und 5a dargestellt. Der Bremsdrehhebel 9 ist über ein Gleitlager in einer Verschwenkachse 9e im Bremssattel 4 verschwenkbar gelagert. Eine Krafteinleitung in den längeren Hebelarm des Bremsdrehhebels 9 erfolgt z.B. durch einen nicht gezeigten Pneumatikzylinder, dessen Betätigungsstößel am oberen Ende des Bremsdrehhebels 9 angreift und eine Kraft zur Zuspannung der Scheibenbremse 1 parallel zur Bremsscheibenachse 2a in den Bremsdrehhebel 9 einleitet. Die Kraftübertragung auf die Traverse 8 erfolgt über den kürzeren Hebelarm.

Durch die Traverse 8 wird über die Gewinde 6d, 6'd die Zuspannkraft auf die beiden Gewindestempel 6, 6' verteilt und über die Druckstücke 6e, 6'e auf den zuspannseitigen Bremsbelag 3 übertragen. Nach Überwinden des konstruktiven Lüftspiels auf der Zuspannseite stützt sich der zuspannseitige Bremsbelag 3 (in den Figuren 4, 4a, 5, 5a der rechte Bremsbelag 3) an der Bremsscheibe 2 ab und der Bremssattel 4, welcher in Richtung der Bremsscheibenachse 2a verschiebbar am Bremsträger (nicht näher gezeigt) gelagert ist, wird verschoben bis der reaktionsseitige Bremsbelag 3 (in den Figuren 4, 4a, 5, 5a der linke Bremsbelag 3) auch an der anderen Seite der Bremsscheibe 2 zur Anlage kommt.

In dieser Variante ist der reaktionsseitige Bremsbelag 3 mit seinem Bremsbelagträger 3a größer ausgeführt als der zuspannseitige Bremsbelag 3. Durch seine vergrößerte Fläche kann bei gleichem Verschleißvolumen die Dicke des Reibmaterials des Bremsbelags 3 reduziert werden. Dabei ergeben sich eine höhere Steifigkeit der gesamten Scheibenbremse 1 sowie eine reduzierte Kapazität der Verschleißnachstellung. Diese reduzierte Kapazität führt zu Bauraumvorteilen aufgrund kürzerer Gewindestempel und natürlich auch zur Gewichtsreduzierung.

In dieser Variante verlaufen die Axialnuten 6c, 6'c der Gewindestempel 6, 6' über die gesamte Länge der Gewindestempel 6, 6' zusammen mit dem Außengewinde 6d, 6'd.

In Fig. 4, 4a ist dargestellt, dass die Nachstelleinrichtung 11a der Verschleißnachstellvorrichtung 11 mit einem Deckel 12a über der Lagerscheibe 12, die im Bremssattel 4 mit der Nachstelleinrichtung 11a eingesetzt ist, an dem Bremssattel 4 befestigt ist.

Die Mitnehmereinrichtung 11b weist im Unterschied zu der in Fig. 2 gezeigten Ausführung einen unterschiedlich gestalteten Aufsatz 7 auf. Damit ist es möglich, dass die Gewindestempel 6 und 6' in gleicher Ausführung hergestellt werden können. Und zwar ist der Aufsatz 7 in Gestalt einer Hülse ausgeführt, deren Aufsatzabschnitt 7a konzentrisch zum Gewindestempel 6' um diesen herum angeordnet und an dem Koppelrad 20'a verdrehsteif angebunden ist. Diese Hülse des Aufsatzes 7 verfügt über eine Verbindung, z.B. eine in einfacher Weise zusammensteckbare drehfeste Kupplung, zu dem Betätigungsende 7b, welches nach außen geführt ist (siehe Fig. 3) und gleichzeitig eine drehfeste Kopplung mit dem Sensor 7c (siehe Fig. 2) bildet.

Fig. 6 zeigt eine vergrößerte Schnittansicht der Nachstelleinrichtung 11a der erfindungsgemäßen Verschleißnachstellvorrichtung 11 nach Fig. 4.

Unter dem Begriff "oben" bzw. "Oberseite" ist die Seite des jeweiligen Bauteils zu verstehen, welche im eingebauten Zustand in der Scheibenbremse 1 zur Zuspannseite weist. Die "Unterseite" des jeweiligen Bauteils bzw. "unten" weist dann zur Bremsscheibe 2.

Die Nachstelleinrichtung 11a umfasst die Lagerscheibe 12, den Tragkörper 13, das Antriebselement 15a, eine Kugelrampenkupplung 15 mit einer Überlastkupplung 16c, die als Rutschkupplung ausgeführt ist, ein Druckelement 17, ein Abtriebselement 18 und mindestens ein Kraftspeicherelement 19.

Die Lagerscheibe 12 ist in dem Dokument DE 10 2004 037 771 A1 beschrieben. Sie dient zur Lagerung und Abstützung der Nachstelleinrichtung 11a am Bremssattel 4 dergestalt, dass sie einerseits in einem oberen Endbereich eines Lagerabschnitts 13a des Tragkörpers 13 angebracht ist und andererseits eine Lagerung für das Antriebselement 15a bildet.

Der Tragkörper 13 ist in Hülsengestalt mit dem oberen Lagerabschnitt 13a und einem Aufnahmeabschnitt 13c gebildet. Der Lagerabschnitt 13a weist einen geringeren Außendurchmesser auf als der Aufnahmeabschnitt 13c und ist mit diesem über eine Schulter 13b verbunden. Eine axiale Länge des Lagerabschnitts 13a des Tragkörpers 13 beträgt ungefähr ein Drittel der Gesamtlänge des Tragkörpers 13, wobei eine Gesamtlänge der Nachstelleinrichtung 11a etwa die Gesamtlänge des Tragkörpers 13 plus ungefähr ein Viertel der Gesamtlänge des Tragkörpers 13 aufweist. Ein Innendurchmesser des Aufnahmeabschnitts 13c ist so groß ausgeführt, dass der Aufnahmeabschnitt 13c des Tragkörpers 13 den zugehörigen Gewindestempel 6 zumindest teilweise umgibt. Ein unteres Ende des Aufnahmeabschnitts 13c weist eine sich radial nach außen erstreckende, kragenförmige Umbördelung auf, die als ein Auflageabschnitt 13d für das Kraftspeicherelement 19 dient.

Das Antriebselement 15a ist Bestandteil einer Kugelrampenkupplung 15 mit einem Freilauf 16 und weist beiderseits in Axialrichtung jeweils eine Wälzkörperanordnung auf. An der Oberseite ist das Antriebselement 15a dazu mit einer innen liegenden umlaufenden Wälzkörperlauffläche für Stützkugeln 15d ausgebildet, die mit einer an der Lagerscheibe 12 abgestützten Stützscheibe 15e eine obere Wälzkörperanordnung bilden. An der umlaufenden Außenseite des Antriebselementes 15a ist der Konturabschnitt 15b eingeformt. Der Konturabschnitt 15b kann z.B. eine Verzahnung sein, welche mit der Betätigungskontur 9c des Betätigers 9b des Bremsdrehhebels 9 korrespondiert. Der Konturabschnitt 15b erstreckt sich radial zur Nachstellerachse 5a und ist mit dem Antriebselement 15a an dem oberen Ende der Nachstelleinrichtung 11a angeordnet, wodurch in Bezug auf den Betätiger 9b für diesen ein langer Hebelarm möglich ist (siehe z.B. Fig. 2).

Die Wälzkörperanordnung an der Unterseite des Antriebselementes 15a wird von Rampenkugeln 15c und einem Rampenring 15f der Kugelrampenkupplung 15 gebildet. Sowohl die Unterseite des Antriebselementes 15a als auch die ihr gegenüberliegende Oberseite des Rampenrings 15f sind mit nicht näher dargestellten Kugelrampen für die Rampenkugeln 15c ausgebildet, die zwischen dem Antriebselement 15a und dem Rampenring 15f angeordnet sind. Der Rampenring 15f und das Antriebselement 15a sind weiterhin mittels eines elastischen Kopplungselementes 14, beispielsweise eine Schlingfeder, gekoppelt. Das elastische Kopplungselement 14 wirkt einerseits auf die Kugelrampenkupplung 15 derart ein, dass die Rampenkugeln 15c in den Kugelrampen in einer bestimmten Position stehen bzw. in eine solche gestellt werden. Andererseits wirkt das elastische Kopplungselement 14 auf den Freilauf 16 zur Spielverringerung ein.

Der Freilauf 16 umfasst den Rampenring 15f, Freilaufkugeln 16a und einen Abtriebsring 16b. Die Freilaufkugeln 16a sind zwischen der Unterseite des Rampenrings 15f, die von einem sich axial nach unten erstreckenden Kragen mit konischer Innenseite umlaufend umgeben ist, und einer konischen Außenseite des Abtriebsrings 16b in nicht näher dargestellter Weise mit Bildung einer Freilauffunktion angeordnet, wodurch eine Relativbewegung zwischen dem Rampenring 15f und dem Abtriebsring 16b in "Durchlassrichtung" ermöglicht ist.

Die Kugelrampenkupplung 15 mit dem Freilauf 16 umfasst somit das Antriebselement 15a, Rampenkugeln 15c, den Rampenring 15f, die Freilaufkugeln 16a und den Abtriebsring 16b.

An dem unteren Ende des Abtriebsrings 16b ist ein sich radial nach außen erstreckender Flansch angeordnet. Der sich axial nach unten erstreckenden Kragen des Rampenrings 15f überdeckt den Abtriebsring 16b außen zu etwa zwei Drittel in Axialrichtung. Der untere Rand dieses Kragens und der äußere umlaufende Rand des Flansches des Abtriebsrings 16b sind mit einem nicht näher bezeichneten Dichtkragen nach außen hin abgedichtet.

Die Oberseite des Abtriebsrings 16b erstreckt unterhalb des Rampenrings 15f radial nach innen und steht mit einer Unterseite eines Flansches einer Stützhülse 15g in Kontakt. Die Stützhülse 15g erstreckt sich von diesem Flansch ausgehend axial nach oben, wobei ihre Außenwand zwischen dem Lagerabschnitt 13a des Tragkörpers 13 und den Innenseiten des Rampenrings 15f und des Antriebselementes 15a angeordnet ist. Ein Teil des Außenumfangs des Flansches der Stützhülse 15g zentriert den Rampenring 15f

Der Abtriebsring 16b weist eine innere Ausdrehung auf, deren Innendurchmesser mit dem Außendurchmesser des Aufnahmeabschnitts 13c des Tragkörpers 13 korrespondiert und die Schulter 13b des Tragkörpers 13 aufnimmt.

Die Lagerscheibe 12, das Antriebselement 15a mit seinen beidseitigen Wälzlageranordnungen (Stützkugeln 15d und Kugelrampenkupplung 15), dem Kopplungselement 14 und dem Freilauf 16 sowie die Stützhülse 15g sind um den Lagerabschnitt 13a des Tragkörpers 13 herum in Reihe angeordnet.

Unter dem Flansch des Abtriebsrings 16b ist ein Druckelement 17 angeordnet. Das Druckelement 17 weist eine abgestufte, hohlzylinderförmige Gestalt mit einem sich nach innen radial erstreckenden Rand auf, dessen Oberseite mit der Unterseite des Flansches des Abtriebsrings 16b in Kontakt steht und eine Überlastkupplung 16c bildet. Dieser obere Rand des Druckelementes 17 ist mit einer axialen Bohrung versehen, die einen Innendurchmesser aufweist, der mit dem Außendurchmesser des Aufnahmeabschnitts 13c des Tragkörpers 13 korrespondiert. Das Druckelement 17 ist damit auf dem Aufnahmeabschnitt 13c in Axialrichtung verschiebbar zentriert.

Von diesem oberen Rand des Druckelementes 17 erstreckt sich in Axialrichtung ein kurzes Stück Zylinderwand nach unten, welches dann in einer Abstufung in einen sich weiter in Axialrichtung nach unten erstreckenden Kopplungsabschnitt 17a größeren Durchmessers übergeht. Die axiale Länge des Kopplungsabschnitts 17a ist etwa doppelt so groß wie die axiale Länge der darüber angeordneten Zylinderwand.

Unterhalb des oberen Rands des Druckelementes 17 ist eine Wälzkörperlauffläche vorgesehen, welche mit Druckkugeln 17b in Kontakt steht. Die Druckkugeln 17b sind radial von dem kurzen Stück Zylinderwand des Druckelementes 17 begrenzt und stehen unten mit einer Druckscheibe 17c in Kontakt. Zwischen der Unterseite der Druckscheibe 17c und dem Auflageabschnitt 13d des Tragkörpers 13 ist das Kraftspeicherelement 19 angeordnet, welches hier als Druckfeder ausgeführt ist. Die oberste Windung des Kraftspeicherelementes 19 ist unter der Druckscheibe 17c in dem Druckelement 17 von dessen umlaufenden Kopplungsabschnitt 17a aufgenommen.

Das Kraftspeicherelement 19 erzeugt eine Axialkraft zwischen dem Auflageabschnitt 13d des Tragkörpers 13 und der Stützscheibe 15e, die mit der Lagerscheibe 12 und über diese mit dem oberen Ende des Tragkörpers 13 verbunden ist. Auf diese Weise werden die Funktionselemente der Nachstelleinrichtung 11a zusammengedrückt.

Außerdem erfolgt durch das Kraftspeicherelement 19 eine Vorspannung der Kugelrampenkupplung 16 und der Überlastkupplung 16c.

Die Unterseite des Kopplungsabschnitts 17a des Druckelementes 17 ist mit dem oberen Abschnitt des Abtriebselementes 18 verbunden. Das Abtriebselement 18 ist ähnlich wie der Tragkörper 13 in Hülsengestalt mit zwei zylindrischen Abschnitten 18a, 18c gebildet, die über einen Schulterabschnitt 18b verbunden sind, wobei der obere zylindrische Abschnitt als ein Abtriebskopplungsabschnitt 18a einen größeren Durchmesser aufweist als der unten zylindrische Abschnitt, der als Abtriebsabschnitt 18c bezeichnet ist. Mit anderen Worten, das Abtriebselement 18 ist im Gegensatz zum Tragkörper 13 um 180° um die Horizontale gedreht angeordnet und überdeckt mit seinem Abtriebskopplungsabschnitt 18a den Aufnahmeabschnitt 13c des Tragkörpers 13 zu mehr als drei Viertel der Länge des Aufnahmeabschnitt 13c des Tragkörpers 13. Die axiale Länge des Abtriebskopplungsabschnitt 18a beträgt ungefähr drei Viertel der Länge des Aufnahmeabschnitt 13c des Tragkörpers 13, und die axiale Länge des Abtriebsabschnitts 18c des Abtriebselementes 18 beträgt etwa ein Drittel der Länge des Abtriebskopplungsabschnitt 18a des Abtriebselementes 18. Dabei ist das Kraftspeicherelement 19 zwischen der Außenseite des Aufnahmeabschnitts 13c und der Innenseite des Abtriebskopplungsabschnitt 18a angeordnet. Der Schulterabschnitt 18b des Abtriebselementes 18 liegt unterhalb des Auflageabschnitts 13d des Aufnahmeabschnitt 13c des Tragkörpers 13.

Der Abtriebsabschnitt 18c des Abtriebselementes 18 erstreckt sich in den Innenraum des Koppelrads 20a mit einem radialen Abstand zu dem Innenprofil 20d des Koppelrads 20a. Im unteren Endbereich des Abtriebsabschnitt 18c sind in diesem Ausführungsbeispiel nicht näher bezeichnete Aufnahmen eingeformt, in welchen jeweils ein Übertragungselement 18d, hier sind die Übertragungselemente 18d als Kugeln ausgebildet, beweglich angeordnet ist. Die Übertragungselemente 18d stellen einerseits einen Eingriff mit dem Abtriebselement 18b und andererseits einen Eingriff mit dem Innenprofil 20d des Koppelrads 20a her. Auf diese Weise ist eine drehfeste Kopplung des Abtriebselementes 18 mit dem Koppelrad 20a gebildet. Außerdem bildet diese Art Kopplung ein kardanisches Gelenk, wodurch Schwenk- und Vertikalbewegungen der Traverse 8 ausgeglichen werden.

Das Koppelrad 20a wiederum steht mit dem Eingriffsabschnitt 20c, der hier mehrere Nocken aufweist, seiner Unterseite mit den Axialnuten 6c des Gewindestempels 6 in drehfestem Eingriff, wobei eine relative axiale Bewegung zwischen dem Koppelrad 20a und somit zwischen der Traverse 8 und dem Gewindestempel 6 ermöglicht ist. Dies ist auch zwischen dem Koppelrad 20'a und dem Gewindestempel 6' wie oben bereits beschrieben der Fall, wobei die Koppelräder 20a und 20'a über ihre Synchronabschnitte 20b mittels des Synchronmittels 20g, hier eine Kette, gekoppelt sind.

Mit anderen Worten, die Nachstelleinrichtung 11a ist über das Koppelrad 20a mit dem Gewindestempel 6 und über die Kette (Synchronmittel 20g) der Synchroneinrichtung 20 über das andere Koppelrad 20'a mit dem anderen Gewindestempel 6' der Mitnehmereinrichtung 11b formschlüssig gekoppelt.

Das Koppelrad 20a (und ebenfalls das andere Koppelrad 20'a) ist an der Traverse 8 ortsfest und drehbar angeordnet. In Fig. 6 ist dargestellt, dass das Koppelrad 20a in der Aufnahme 8a der Traverse 8 eingesetzt und mit dem Sicherungselement 21 axial festgelegt ist. Außerdem ist zwischen der Unterseite mit dem Eingriffsabschnitt 20c des Koppelrads 20a und dem Boden der Aufnahme 8a eine Axialfeder 24, z.B. eine Tellerfeder, angeordnet, wodurch eine definierte Lage des Koppelrads 20a zum Synchronmittel 20g geschaffen ist.

So ist es auch möglich, dass die Nachstelleinrichtung 11a ausgetauscht werden kann, ohne die Synchroneinrichtung 20 auszubauen, denn der Abtriebsabschnitt 18c kann aus dem Koppelrad 20a in einfacher Weise herausgezogen und wieder eingesteckt werden.

Im Folgenden wird die Funktionsweise der Nachstelleinrichtung 11a erläutert.

Bei jeder Zuspannbewegung des Bremsdrehhebels 9 (Fig. 4, 4a, 5, 5a) wird über den mit dem Bremsdrehhebel 9 verbundenen Betätiger 9b mittels der Betätigungskontur 9c, die mit dem Konturabschnitt 15b des Antriebselementes 15a der Nachstelleinrichtung 11a in Eingriff steht, zunächst das konstruktive Lüftspiel durchlaufen und dann über das Antriebselement 15a um die Nachstellerachse 5a in einer bestimmten Drehrichtung, beispielsweise im Uhrzeigersinn, verdreht.

In dem Fall, in welchem eine Nachstellung des Lüftspiels erforderlich geworden ist, wird diese Drehbewegung des Antriebselementes 15a über die Kugelrampenkupplung 15 auf den Rampenring 15f übertragen. In dieser Drehbewegung sperrt der Freilauf 16 und wirkt als drehfeste Kupplung, derart, dass diese Drehbewegung weiter auf den Abtriebsring 16b übertragen wird.

Der Abtriebsring 16b seinerseits überträgt diese Drehbewegung über die Überlastkupplung 16c auf das Druckelement 17, welches mit dem Abtriebselement 18 drehfest verbunden ist. Mittels des Abtriebsabschnitts 18c des Abtriebselementes 18 wird durch die Übertragungselemente 18d, die hier als Kugeln ausgebildet sind, die Drehbewegung zur Nachstellung über das Innenprofil 20d auf das Koppelrad 20a übertragen. Das Koppelrad 20a ist seinerseits mit dem Gewindestempel 6 und über das Synchronmittel 20g mit dem anderen Koppelrad 20'a mit dem Gewindestempel 6' der Mitnehmereinrichtung 11b drehfest gekoppelt und überträgt so die Drehbewegung der Nachstelleinrichtung 11a auf die Gewindestempel 6, 6', welche in der Traverse 8 in den Gewinden zur Nachstellung des Bremsbelags 3 verdreht werden.

Sobald die Bremsbeläge 3 durch die Nachstellbewegung an der Bremsscheibe 2 anliegen, werden die Gewindestempel 6, 6' in der Traverse 8 durch die dabei aufgebaute Spannkraft und daraus resultierende Reibkraft in den Gewinden 6d, 6'd in der Traverse 8 blockiert. Dann wird eine weitergehende Zustellbewegung durch den Bremsdrehhebel 9 über den Betätiger 9b auf das Antriebselement 15a zwar auch weiter übertragen, aber eine weitere Übertragung auf den Abtriebsring 16b mittels der Kugelrampenkupplung 15 unterbunden. Dabei bildet die Kugelrampenkupplung 15 eine Überlastkupplung.

Damit die so ausgeführte Nachstellung beim Lösen der Scheibenbremse 1 durch Zurückbewegen bzw. Zurückschwenken des Bremsdrehhebels 9 nicht wieder aufgehoben wird, wirkt nun der Freilauf 16 derart, dass in der Lösebewegung die Rückdrehbewegung des Antriebselementes 15a, in dem hier benutzten Beispiel im Gegenuhrzeigersinn, ausgelöst durch den Betätiger 9b nicht auf den Abtriebsring 16b übertragen wird, wobei das Antriebselement 15a gegenüber dem stillstehenden Abtriebsring 16b eine Relativdrehbewegung zurück im Gegenuhrzeigersinn ausführt.

In dem anderen Fall, in dem (noch) keine Nachstellung der Bremsbeläge 3 erforderlich ist, werden die Gewindestempel 6, 6' durch Anliegen der Bremsbeläge 3 an der Bremsscheibe 2 nach Durchlaufen des konstruktiven Lüftspiels sofort blockiert, und die Überlastkupplung gebildet durch die Kugelrampenkupplung 15 ermöglicht eine Verdrehung des Antriebselementes 15a relativ zu dem Rampenring 15f.

Die Überlastkupplung 16c ist insbesondere bei einem manuellen Rückstellen der Gewindestempel 6, 6' über das Betätigungsende 7b der Mitnehmereinrichtung 11b z.B. im Wartungsfall erforderlich (siehe z.B. Fig. 4, 4a). Dabei wird der Gewindestempel 6' über das Koppelrad 20'a durch den manuell verdrehten Aufsatz 7 verdreht. Diese Drehbewegung wird über das Synchronmittel 20g der Synchroneinrichtung 20 auf das Koppelrad 20a und den damit gekoppelten Gewindestempel 6 übertragen. Gleichzeitig wird aber auch durch die Kopplung der Übertragungselemente 18d zwischen Innenprofil 20d des Koppelrads 20a und dem Abtriebsabschnitt 18c das Abtriebselement 18 der Nachstelleinrichtung 11a entgegen einer Nachstelldrehbewegung (in dem Beispiel im Gegenuhrzeigersinn) verdreht. Da aber das Antriebselement 15a, das mit dem stillstehenden Betätiger 9b in Eingriff steht und somit blockiert ist, über die Kugelrampenkupplung 15 verdreht wird, erfolgt ein Auslösen der Überlastkupplung 16c und eine Entkopplung der manuellen Rückdrehbewegung des Gewindestempels 6 von dem blockierten Antriebselement 15a.

Bei einer lang andauernden Bremsung, z.B. Bergabfahrt, kann es während nur einer Bremsbetätigung zu einem relativ großen Verschleiß von Bremsbelägen 3 kommen. Dadurch kann das aktuelle Lüftspiel der Scheibenbremse 1 so groß werden, dass es bei einer nächsten Bremsung nicht vollständig rückstellbar ist. Bei einer Bremsbetätigung wird üblicherweise etwa 20% Lüftspielreduktion erreicht. Bei einem vorhandenen Lüftspiel von bis zu 2 mm und einem konstruktiven Lüftspiel von 0,8 mm würde nach der anschließenden Bremsbetätigung ein Lüftspiel von 1,76 mm verbleiben, obwohl ein Soll-Lüftspiel ca. 0,8 mm betragen sollte.

Die Größe eines Nachstellwertes zur Reduktion eines zu großen Lüftspiels durch die Nachstelleinrichtung 11a pro Zuspannvorgang des Bremsdrehhebels 9 ist davon abhängig, in welcher Weise die Schwenkbewegung des Bremsdrehhebels 9 beim Zuspannen in eine Verdrehbewegung des Nachstellers in einem bestimmten Übersetzungsverhältnis umgesetzt bzw. übersetzt wird. Eine Nachstellgeschwindigkeit der Nachstelleinrichtung wird durch dieses Übersetzungsverhältnis bestimmt. Unter dem Begriff "Nachstellgeschwindigkeit" ist hier die Geschwindigkeit zu verstehen, mit der ein aktuell zu großes Lüftspiel wieder auf das Soll-Lüftspiel eingestellt wird.

Üblicherweise wird die Nachstelleinrichtung 11a mittels des Antriebs 10 (siehe Fig. 2) vom Bremsdrehhebel 9 über den Betätiger 9b bei jedem Bremsvorgang der Scheibenbremse 1 angetrieben. Dabei bilden der Betätiger 9b und das Antriebselement 15a der Nachstelleinrichtung 11a ein Getriebe mit einem bestimmten Übersetzungsverhältnis. Aufgrund der Bauraumverhältnisse und der Montagevorgänge ist bei den herkömmlichen mechanischen Ausführungen zum Nachstellerantrieb ein solches Übersetzungsverhältnis durch die Länge eines effektiven Hebelarms des Betätigers 9b und die Länge eines weiteren effektiven Hebelarms an einem herkömmlichen Nachsteller begrenzt. Die Nachstellgeschwindigkeit ist somit auch eingeschränkt. Das Übersetzungsverhältnis bei der erfindungsgemäßen Vorrichtung 200 wird nun anhand von Fig. 7 beschrieben.

Fig. 7 zeigt die Nachstelleinrichtung 11a nach Fig. 6 im eingebauten Zustand, und Fig. 8 stellt eine schematische Perspektivansicht des Bremsdrehhebels 9 mit Betätiger 9b dar.

In Fig. 7 ist zu erkennen, wie die Nachstelleinrichtung 11a auf den Gewindestempel 6 der Spindeleinheit 5 wie oben bereits erläutert aufgesetzt ist und die Lagerscheibe 12 im Bremssattel 4 in einer nicht näher bezeichneten Öffnung festgelegt ist. Der Deckel 12a verschließt diese Öffnung.

An einer Stirnseite des Hebelkörpers 9a des Bremsdrehhebels 9, welche zur Spindeleinheit 5 weist, ist der Betätiger 9b, hier mittels eines Befestigungselementes 9b (Schraube, Niet - auch andere Befestigungsmöglichkeiten, z.B. Schweißen sind natürlich möglich); in einem Befestigungsabschnitt 9f des Betätigers 9b angebracht. Der Betätiger 9b ist als flacher Hebel mit entsprechender Festigkeit, z.B. aus Stahl, ausgebildet und erstreckt sich rechtwinklig zur Schwenkachse 9e (siehe Fig. 5, 5a) des Bremsdrehhebels 9 und parallel zur Nachstellerachse 5a wie auch zur Mitnehmerachse 5'a (siehe auch Fig. 2) in Zuspannrichtung in Richtung des Deckels 12a. Dabei ist der Betätiger 9b mit einem geringen Abstand zu den Außenumfängen der Funktionsbauteile (Kupplungen, siehe Fig. 6) der Nachstelleinrichtung 11a angeordnet. An dem oberen freien Ende des Betätigers 9b ist die Betätigungskontur 9c angebracht, welche sich in einem Winkel α (hier z.B. 90°) in Richtung auf die Nachstellerachse 5a erstreckt. Der Betätiger 9b und die Betätigungskontur 9c sind in diesem Beispiel somit im Wesentlichen L-förmig ausgebildet. Dabei ist eine Länge der Betätigungskontur 9c in dieser Richtung so gewählt, dass die Betätigungskontur 9c in Eingriff mit dem Konturabschnitt 15b des Antriebselementes 15a der Nachstelleinrichtung 11a steht.

Eine Länge eines effektiven Hebelarms h1 des Betätigers 9b und eine effektive Länge eines Hebelarms h2 an der Nachstelleinrichtung 11a bilden das Übersetzungsverhältnis i in dem folgenden Zusammenhang.

$$i = h1/h2$$

Dabei ist der Hebelarm h1 der Abstand von der Schwenkachse 9e des Bremsdrehhebels 9 zu dem Punkt der Betätigungskontur 9c, welcher in Kontakt mit dem Konturabschnitt 15b des Antriebselementes 15a der Nachstelleinrichtung 11a steht. Der Hebelarm h2 steht senkrecht auf dem Hebelarm h1 und ist hier der Abstand von diesem Kontaktpunkt zur Nachstellerachse 5a. Wenn die Betätigungskontur 9c in einem Winkel α unterschiedlich zu 90° ausgebildet ist, ist der Hebelarm h2 die projizierte Länge der Betätigungskontur 9c auf eine gedachte Linie senkrecht zum Hebelarm h1.

Zum Erhalt eines großen Übersetzungsverhältnisses i und somit einer großen Nachstellgeschwindigkeit ist der Hebelarm h1 hier in einer maximalen Länge ausgeführt, wobei der Bauraum der Scheibenbremse 1 vollständig ausgenutzt wird. Der mit der Betätigungskontur 9c L-förmig ausgebildete Betätiger 9b greift um eine Hüllkontur der Nachstelleinrichtung 11a und verringert auf diese Weise den Hebelarm h2 der Nachstelleinrichtung 11a. Die Hüllkontur der Nachstelleinrichtung 11a ist durch den Außendurchmesser der Kupplungen bzw. des Bauraums der Kupplungen gegeben, wobei dieser Außendurchmesser hier als Hülldurchmesser d1 angegeben ist. Außerdem überdeckt ein Hülldurchmesser d2 einer Nachstellerfixierung der Lagerscheibe 12 im Bremssattel 4 den Hebelarm h2 nicht. Aufgrund der Ausgestaltung der Nachstelleinrichtung 11a in der gezeigten und oben beschriebenen schlanken Bauweise ist ein besonders effektive Ausnutzung des Bauraumes möglich, wodurch eine Nachstellgeschwindigkeit gesteigert ist.

Die Nachstelleinrichtung 11a wird bei ihrer Montage von der Belagschachtseite (in Fig. 7 von unten) nach dem Bremsdrehhebel 9 in die Bremse eingesetzt. Durch diese Anordnung nach Fig. 7 kann das Übersetzungsverhältnis i unabhängig vom notwendigen Bauraum der Kupplungen der Nachstelleinrichtung 11a sein.

Eine größere Lüftspielreduktion, d.h. ein weiteres Steigern der Nachstellgeschwindigkeit kann auch oder zusätzlich mit dem erfindungsgemäßen Verfahren erreicht werden, das nun im Zusammenhang mit den Figuren 9 bis 11 beschrieben wird.

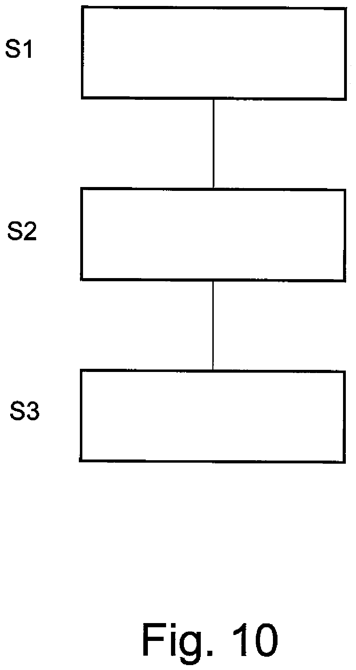

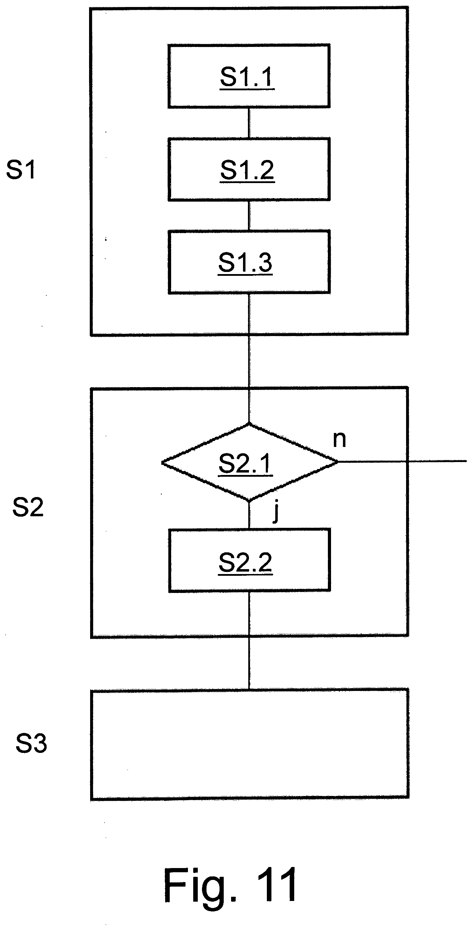

In Fig. 9 ist ein schematisches Blockschaltbild eines Ausführungsbeispiels der Steuereinrichtung 100 der Vorrichtung 200 (siehe Fig. 1) gezeigt. Fig. 10 und 11 zeigen schematische Flussdiagramme eines Ausführungsbeispiels des erfindungsgemäßen Verfahrens zum Betreiben der Verschleißnachstellvorrichtung 11 der Scheibenbremse 1.

Die Steuereinrichtung 100 umfasst in diesem Beispiel eine Ermittlungseinheit 101 und eine Übertragungseinheit 102. Die Ermittlungseinheit 101 weist eine Recheneinheit 103, eine Vergleichseinheit 104 und eine Speichereinheit 105 auf.

Die Ermittlungseinheit 101 ermittelt anhand von Parametern der Scheibenbremse 1 während eines Bremsvorgangs den dabei auftretenden Verschleiß. Dies erfolgt mittels eines Schätzverfahrens durch die Recheneinheit 103. Mit der Vergleichseinheit 104 und Vergleichs- bzw. Referenzwerten, die in der Speichereinheit 105 vorher gespeichert worden sind, wird festgestellt, ob aktuell ein zu großes Lüftspiel vorliegt. Wenn dies der Fall ist, wird eine Anzahl von Zuspannvorgängen festgelegt, die notwendig sind, um das Soll-Lüftspiel wieder einzustellen. Anhand dieser Anzahl wird dann so oft zugespannt, bis das Soll-Lüftspiel erreicht ist. Dabei wird die Scheibenbremse 1 nur soweit zugespannt, dass eine Ansprechkraft oder ein Ansprechdruck der Scheibenbremse 1 gerade erreicht wird, ohne dass eine (merkliche) Abbremsung des betreffenden Rades, dem die Scheibenbremse 1 zugeordnet ist, auftritt. Auf diese Art und Weise wird eine Nachstellgeschwindigkeit der Scheibenbremse 1 gesteigert. Die Übertragungseinheit 102 dient zur Übertragung der Parameter, die zur Ermittlung des geschätzten Verschleißwertes, z.B. aus einem nicht gezeigten Bremssteuergerät und/oder einem Motorsteuergerät des zugehörigen Fahrzeugs, erforderlich sind. Außerdem übermittelt die Übertragungseinheit 102 den Wert der Anzahl der notwendigen Zuspannvorgänge an das Bremssteuergerät. In der Speichereinheit kann der jeweils aktuelle geschätzte Verschleißwert gespeichert werden. Daraus kann z.B. eine Meldung generiert werden, wann ein Wechsel der Bremsbeläge 3 und evtl. der Bremsscheibe 2 fällig wird. Diese Meldung kann z.B. dem Fahrer angezeigt oder für ein Diagnosegerät bei einer Wartung bereitgestellt werden.

In Fig. 10 ist ein allgemeines Flussdiagramm des erfindungsgemäßen Verfahrens gezeigt.

In einem ersten Verfahrensschritt S1 werden während eines Bremsvorgangs mit der Scheibenbremse 1 beim Zuspannen verschiedene Parameter ermittelt, mittels derer eine Aussage über den aktuellen Verschleiß der Bremsbeläge 3 getroffen werden kann. Dazu zählen zum Beispiel eine Dauer des Bremsvorgangs, die Kraft der Zuspannung (z.B. ein Druck eines Pneumatikzylinders, der den Bremsdrehhebel 9 betätigt), die Umgebungstemperatur, eine aktuelle Temperatur der Scheibenbremse 1 bzw. deren Temperaturanstieg, der zuvor ermittelte oder geschätzte Verschleißwert. Es können auch noch andere Parameter eines Bremssteuergerätes und eines Motorsteuergerätes herangezogen werden, wie beispielsweise die Fahrgeschwindigkeit, tatsächliches Gesamtgewicht des Fahrzeugs usw. Die Übertragung dieser Parameter erfolgt mittels der Übertragungseinheit 102 der Steuereinrichtung 100 an die Ermittlungseinheit 101. Dazu ist die Übertragungseinheit 102 z.B. über ein Fahrzeugbussystem mit dem Bremssteuergerät und dem Motorsteuergerät verbunden.

Anhand dieser ermittelten Parameter wird dann mit einem Schätzverfahren, d.h. mit einem entsprechenden Algorithmus, der Verschleiß während dieses Bremsvorgangs ermittelt. Dieses Ermitteln kann in der Ermittlungseinheit 101 durch die Recheneinheit 102 z.B. per Software erfolgen. Es ist natürlich auch möglich, dass eine andere separate Vorrichtung oder ein Bestandteil eines Bremssteuergerätes dazu benutzt wird.

Der so abgeschätzte Verschleiß entspricht einem aktuell abgeschätzten Lüftspiel der Scheibenbremse. Dieser Schätzwert wird am Ende des Bremsvorgangs bzw. dann, wenn ein Wert vorliegt, mit dem vorher festlegbaren Referenzwert in der Vergleichseinheit 104 verglichen. Dies erfolgt in einem zweiten Verfahrensschritt S2.

Wenn der Referenzwert nicht erreicht wird, erfolgt keine weitere Aktion.

Ist der Schätzwert größer oder gleich dem Referenzwert, so wird eine Anzahl von leichten Bremsbetätigungen durch die Recheneinheit 1002 bestimmt. Dies kann z.B. über gespeicherte Tabellenwerte oder Berechnungen ausgeführt werden.

In einem dritten Verfahrensschritt S3 wird dann die Scheibenbremse 1 anhand der bestimmten Anzahl durch das Bremssteuergerät entsprechend mehrfach leicht betätigt, um die Nachstellung des Verschleißwertes zur Einstellung des Soll-Lüftspiels zu erreichen. Diese leichten Bremsbetätigungen erfolgen dabei so, dass z.B. ein Bremsdruck derart gewählt wird, dass der Ansprechdruck der Scheibenbremse 1 gerade erreicht wird. Dadurch wird die Nachstelleinrichtung 11a durch den Betätiger 9b des Bremsdrehhebels 9 betätigt und führt jeweils eine Nachstellung aus. Auf diese Weise wird das Soll-Lüftspiel schneller erreicht, da mehrere Nachstellungen hintereinander erfolgen. So wird eine hohe Nachstellgeschwindigkeit erzielt.

Dabei wird im dritten Verfahrensschritt S3 das Bremssteuergerät von der Steuereinrichtung 100 mit entsprechenden Signalen so gesteuert, dass die leichten Bremsbetätigungen vom Bremssteuergerät eingeleitet werden können. Das kann schon während des Lösevorgangs der Scheibenbremse 1 nach dem betreffenden Bremsvorgang beginnen.

Fig. 11 stellt ein Flussdiagramm mit weiteren Teilschritten beispielhaft dar.

In einem Teilschritt S1.1 erfolgt im ersten Verfahrensschritt S1 mittels der Übertragungseinheit 102 der Steuereinrichtung 100 bei Erkennen eines Beginns eines Bremsvorgangs die Übertragung der erforderlichen Parameter zur Abschätzung in die Ermittlungseinheit 101, wenn ein Bremsvorgang stattfindet.

In einem weiteren Teilschritt S1.2 werden die Parameter in der Recheneinheit 103 ausgewertet. Dazu können auch weitere Werte, die vorher in der Speichereinrichtung 105 gespeichert worden sind, herangezogen werden. Dies können z.B. der beim letzten Bremsvorgang ermittelte Verschleißwert und andere Werte sein, die z.B. tabellenförmig, gespeichert sind.

Schließlich wird ein Verschleißwert anhand dieser Parameterauswertungen in einem dritten Teilschritt S1.3, z.B. durch einen geeigneten Algorithmus, abgeschätzt.

Ein Verschleißwert kann nach einer bestimmten, vorher festlegbaren Zeit der Dauer eines Bremsvorgangs bzw. anhand bestimmter Kriterien, die sich aus den Parametern erkennen lassen (z.B. Fahrgeschwindigkeit, Bremsdruck, Bremsdruckanstieg usw.) vorläufig oder endgültig zur weiteren Auswertung abgeschätzt werden. Es ist klar, dass bei kurzen Bremsungen der Verschleißwert gering ist und z.B. einem Erfahrungswert bzw. einem gespeicherten Tabellenwert entspricht. Es kann außerdem festgelegt werden, welche Kriterien der Parameter (z.B. Dauer des Bremsvorgangs bis zu einem vorher festlegbaren Wert, Fahrgeschwindigkeit, Bremsdruckanstieg usw.) das Abschätzverfahren auslösen.

Sobald ein Verschleißwert vorliegt, wird dieser im Verfahrensschritt 2 in einem weiteren Teilschritt S2.1 mit einem Referenzwert verglichen. Liegt der aktuelle abgeschätzte Verschleißwert unterhalb des Referenzwertes, was durch "n" in Fig. 11 angedeutet ist, so wird das Verfahren abgebrochen und erst bei einem nächsten Bremsvorgang wieder gestartet.

Wird jedoch der Referenzwert durch den abgeschätzten Verschleißwert erreicht oder überschritten, so wird über "j" nach einem weiteren Teilschritt S2.2 verzweigt. In dem Teilschritt S2.2 wird nun die Anzahl der erforderlichen Zuspannvorgänge zum Nachstellen auf das Soll-Lüftspiel mittels der Recheneinheit 103 ermittelt, z.B. durch Berechnung oder anhand von zuvor gespeicherter Tabellenwerte.

Dabei können z.B. auch noch weitere Kriterien zusätzlich in die Ermittlung einfließen, wie z.B. die aktuelle Dauer des Bremsvorgangs, wenn dieser gerade abgeschlossen ist.

Dann schließt sich der Verfahrensschritt S3 wie oben beschrieben an.

Auf diese Weise kann mit dem erfindungsgemäßen Verfahren eine hohe Nachstellgeschwindigkeit bei der oben beschriebenen Scheibenbremse 1 mit der Verschleißnachstellvorrichtung 11, insbesondere in Kombination mit dem beschriebenen Übersetzungsverhältnis i, bewirkt werden. Dies Verfahren ist natürlich auch bei anderen Bremsen mit Verschleißnachstellvorrichtungen einsetzbar.

Die Verschleißnachstellvorrichtung 11 ist für die Verschleißnachstellung für pneumatisch zugespannte Scheibenbremsen im Nutzfahrzeugbereich gestaltet, kann jedoch auch bei allen anderen Anwendungen, wo Verschleißausgleich notwendig ist, zum Einsatz kommen.

Die Erfindung wird durch die oben beschriebenen Ausführungsbeispiele nicht eingeschränkt. Sie ist im Rahmen der beigefügten Ansprüche modifizierbar.

Der Betätiger 9b und der Hebel körper 9a können beispielsweise auch einstückig hergestellt sein.

Das Kraftspeicherelement 19 kann aus mehreren, auch unterschiedlichen, Federelementen bestehen.

Für die Synchroneinrichtung 20 wird kein Deckel benötigt. Dadurch können für die Öffnungen für die Nachstelleinrichtung 11a und die Mitnehmereinrichtung 11b im Bremssattel 4 Deckel mit radialen Dichtungen, z.B. O-Ringe, verwendet werden.

Die Traverse 8 kann mit den Gewindestempeln 6, 6' und der Synchroneinrichtung 20 als vormontierte und synchronisierte Einheit (modularisiertes Montagekonzept) ausgeführt werden. Als vormontierte Einheit ist die Traverse 8 dann austauschbar.

Es ist auch denkbar, dass die Nachstelleinrichtung 11a für eine Scheibenbremse 1 mit nur einer Spindeleinheit 5 mit einem Gewindestempel 6 oder natürlich auch mehr als zwei Gewindestempeln 6, 6' eingesetzt werden kann. Bei der Ausführung der Scheibenbremse 1 mit nur einem Gewindestempel 6 kann das Koppelrad 20a ohne Synchronabschnitt 20b ausgeführt sein.

Es ist möglich, dass die Steuereinrichtung eine separate Vorrichtung oder ein Bestandteil des Bremssteuergerätes oder/und der Motorsteuerung ist.

**Bezugszeichenliste**

| | |
|---|---|
| 1 | Scheibenbremse |
| 2 | Bremsscheibe |
| 2a | Bremsscheibenachse |
| 3 | Bremsbelag |
| 3a | Bremsbelagträger |
| 4 | Bremssattel |
| 5, 5' | Spindeleinheit |
| 5a | Nachstellerachse |
| 5'a | Mitnehmerachse |
| 6, 6' | Gewindestempel |
| 6a, 6'a; 6b, 6'b | Wellenende |
| 6c, 6'c | Axialnut |
| 6d, 6'd | Gewinde |
| 6e, 6'e | Druckstück |
| 7 | Aufsatz |
| 7a | Aufsatzabschnitt |
| 7b | Betätigungsende |
| 7c | Sensor |
| 7d | Einbaugehäuse |
| 8 | Traverse |
| 8a, 8'a, 8b, 8'b | Aufnahme |
| 8c | Traversenoberseite |
| 9 | Bremsdrehhebel |
| 9a | Hebelkörper |
| 9b | Betätiger |
| 9c | Betätigungskontur |

| 9d, 9'd | Lagerabschnitt |
|---|---|
| 9e | Schwenkachse |
| 9f | Befestigungsabschnitt |
| 9g | Befestigungselement |
| 10 | Antrieb |
| 11 | Verschleißnachstellvorrichtung |
| 11a | Nachstelleinrichtung |
| 11b | Mitnehmereinrichtung |
| 12 | Lagerscheibe |
| 12a | Deckel |
| 13 | Tragkörper |
| 13a | Lagerabschnitt |
| 13b | Schulter |
| 13c | Aufnahmeabschnitt |
| 13d | Auflageabschnitt |
| 14 | Kopplungselement |
| 15 | Kugelrampenkupplung |
| 15a | Antriebselement |
| 15b | Konturabschnitt |
| 15c | Rampenkugel |
| 15d | Stützkugel |
| 15e | Stützscheibe |
| 15f | Rampenring |
| 15g | Stützhülse |
| 16 | Freilauf |
| 16a | Freilaufkugel |
| 16b | Abtriebsring |
| 16c | Überlastkupplung |
| 17 | Druckelement |
| 17a | Kopplungsabschnitt |
| 17b | Druckkugel |
| 17c | Druckscheibe |
| 18 | Abtriebselement |
| 18a | Abtriebskopplungsabschnitt |
| 18b | Schulterabschnitt |
| 18c | Abtriebsabschnitt |
| 18d | Übertragungselement |
| 19 | Kraftspeicherelement |
| 20 | Synchroneinrichtung |
| 20a, 20'a | Koppelrad |
| 20b, 20'b | Synchronabschnitt |
| 20c | Eingriffsabschnitt |
| 20d | Innenprofil |
| 20e | Einsatzelement |
| 20f | Verzahnung |
| 20g | Synchronmittel |
| 21, 21', 21'a | Sicherungselement |
| 22, 22' | Lagerbock |
| 22a, 22'a | Zentrieransatz |
| 22b, 22'b | Schwenklager |
| 23 | Rückstellfeder |
| 24 | Axialfeder |
| 100 | Steuereinrichtung |
| 101 | Ermittlungseinheit |
| 102 | Übertragungseinheit |
| 103 | Recheneinheit |
| 104 | Vergleichseinheit |
| 105 | Speichereinheit |

| 200 | Vorrichtung |
| α | Winkel |
| d1, d2 | Hülldurchmesser |
| h1, h2 | Hebelarm |
| S1...3; S1.1...1.3; S2.1...2.2 | Verfahrensschritt |

## Patentansprüche

1. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens einer Spindeleinheit (5, 5') mit jeweils einem Gewindestempel (6, 6'), und mindestens einer Verschleißnachstellvorrichtung (11) mit einer Nachstelleinrichtung (11a) zur Nachstellung eines Reibflächenverschleißes an Bremsbelägen (3) und Bremsscheibe (2) der Scheibenbremse (1), wobei die Nachstelleinrichtung (11a) antriebsseitig mit der Zuspannvorrichtung, vorzugsweise mit dem Bremsdrehhebel (9), über einen Antrieb (10) mit einem Betätiger (9b) und abtriebsseitig mit der mindestens einen Spindeleinheit (5, 5') der Scheibenbremse (1) gekoppelt ist, wobei der Betätiger (9b) eine Betätigungskontur (9c) aufweist, welche an dem Betätiger (9b) in einem Winkel (α) angeordnet ist und mit einem Konturabschnitt (15b) eines Antriebselementes (15a) der Nachstelleinrichtung (11a) in Eingriff steht, **dadurch gekennzeichnet, dass** die Nachstelleinrichtung (11a) umfasst:

   a) das Antriebselement (15a), an dem axial beiderseits jeweils eine Wälzkörperanordnung angeordnet ist, von denen eine als Wälzlager (15d) und eine als Kugelrampenkupplung (15) mit einem Freilauf (16) ausgebildet ist;
   b) ein mit der Kugelrampenkupplung (15) gekoppeltes Druckelement (17), welches mit einem Abschnitt der Kugelrampenkupplung (15) eine Überlastkupplung (16c) bildet;
   c) ein mit dem Druckelement (17) gekoppeltes Abtriebselement (18) zur Kopplung mit einem Koppelrad (20a), welches für eine Kopplung mit der Spindeleinheit (5, 5') ausgebildet ist;
   d) ein Kraftspeicherelement (19) zur Erzeugung einer Vorspannkraft der Kugelrampenkupplung (15) und der Überlastkupplung (16c); und
   e) einen Tragkörper (13), welcher an einem Ende mit einer Lagerscheibe (12) verbunden ist und um welchen herum axial in Reihe mit der Lagerscheibe (12) das Antriebselement (15a), die Wälzkörperanordnungen (15d, 15, 16), die Überlastkupplung (16c), das Abtriebselement (18) und das Kraftspeicherelement (19) angeordnet sind, wobei das Kraftspeicherelement (19) zwischen einem Auflageabschnitt (13d) des Tragkörpers (13) und dem Druckelement (17) angeordnet ist.

2. Scheibenbremse (1) nach Anspruch 1, **dadurch gekennzeichnet, dass** der Betätiger (9b) und die Betätigungskontur (9c) eine L-förmige Gestalt bilden, wobei der Winkel (α) ungefähr 90° beträgt.

3. Scheibenbremse (1) nach Anspruch 1 oder 2, **dadurch gekennzeichnet, dass** der Betätiger (9b) als Hebel mit einem Hebelarm (h1) ausgebildet ist, welcher sich parallel zu der Nachstelleinrichtung (11a) von einer Schwenkachse (9e) der Zuspannvorrichtung zu dem Antriebselement (15a) der Nachstelleinrichtung (11a) erstreckt und dicht neben der Nachstelleinrichtung (11a) angeordnet ist, wobei die Betätigungskontur (9c) einen Hebelarm (h2), welcher sich von dem Ende des Hebelarms (1) zu einer Nachstellerachse (5a) der Nachstelleinrichtung (11a) erstreckt, aufweist.

4. Scheibenbremse (1) nach Anspruch 3, **dadurch gekennzeichnet, dass** der Hebelarm (h1) des Betätigers (9b) und der Hebelarm (h2) der Betätigungskontur (9c) ein Übersetzungsverhältnis (i) zwischen der Zuspannvorrichtung und der Nachstelleinrichtung (11a) in dem folgenden Zusammenhang i = h1/h2 bilden, wobei der Hebelarm (h1) mit einer maximalen Länge ausgelegt ist und der Hebelarm (h2) eine minimale Länge aufweist.

5. Scheibenbremse (1) nach einem der vorhergehenden Ansprüche, **dadurch gekennzeichnet, dass** der Tragkörper (13) der Nachstelleinrichtung (11a) in Hülsengestalt ausgebildet ist, wobei das Innere des Tragkörpers (13) für eine Aufnahme eines Gewindestempels (6, 6') einer Spindeleinheit (5, 5') der zuzuordnenden Scheibenbremse (1) ausgestaltet ist.

6. Scheibenbremse (1) nach Anspruch 5, **dadurch gekennzeichnet, dass** der Tragkörper (13) der Nachstelleinrichtung (11a) einen Lagerabschnitt (13a) und einen Aufnahmeabschnitt (13c) aufweist, welche über eine Schulter (13b) verbunden sind, wobei der Lagerabschnitt (13a) einen geringeren Außendurchmesser als der Aufnahmeabschnitt (13c) aufweist.

7. Scheibenbremse (1) nach Anspruch 6, **dadurch gekennzeichnet, dass** ein anderes Ende des Aufnahmeabschnitts (13c) als Auflageabschnitt (13d) für das Kraftspeicherelement (19) ausgebildet ist.

8. Scheibenbremse (1) nach einem der vorhergehenden Ansprüche, **dadurch gekennzeichnet, dass** das Abtriebselement (18) in Hülsengestalt mit zwei zylindrischen Abschnitten (18a, 18c) ausgebildet ist.

9. Scheibenbremse (1) nach Anspruch 8, **dadurch gekennzeichnet, dass** die zwei zylindrischen Abschnitte (18a, 18c) des Abtriebselementes (18) unterschiedliche Durchmesser aufweisen und über einen Schulterabschnitt (18b) verbunden sind, wobei der eine zylindrische Abschnitt als Abtriebskopplungsabschnitt (18a) einen größeren Durchmesser aufweist als der andere zylindrische Abschnitt, der als Abtriebsabschnitt (18c) zur Kopplung mit dem Koppelrad (20a) ausgebildet ist.

10. Scheibenbremse (1) nach Anspruch 9, **dadurch gekennzeichnet, dass** das Kraftspeicherelement (19) zwischen dem Abtriebskopplungsabschnitt (18a) des Abtriebselementes (18) und dem Tragkörper (13) angeordnet ist.

11. Scheibenbremse (1) nach Anspruch 9 oder 10, **dadurch gekennzeichnet, dass** sich der Abtriebsabschnitt (18c) des Abtriebselementes (18) in einen Innenraum eines Koppelrads (20a) erstreckt und mit einem Innenprofil (20d) des Koppelrads (20a) über Übertragungselemente (18d), vorzugsweise Kugeln, in Zusammenwirkung steht, wobei das Koppelrad (20a) einen Eingriffsabschnitt (20c) aufweist, der zur drehfesten Zusammenwirkung mit einem Gewindestempel (6, 6') der mindestens einen Spindeleinheit (5, 5') der zuzuordnenden Scheibenbremse (1) vorgesehen ist.

12. Scheibenbremse (1) nach Anspruch 11, **dadurch gekennzeichnet, dass** das Koppelrad (20a) einen Synchronabschnitt (20b) aufweist, welcher zur Kopplung mit einem Synchronmittel (20g) einer Synchroneinrichtung (20) der Scheibenbremse (1) vorgesehen ist.

13. Scheibenbremse (1) nach einem der vorhergehenden Ansprüche, **dadurch gekennzeichnet, dass** ein Rampenring (15f) der Kugelrampenkupplung (15) und das Antriebselement (15a) mittels eines elastischen Kopplungselementes (14), vorzugsweise eine Schlingfeder, gekoppelt sind.

14. Verfahren zum Betreiben einer Verschleißnachstellvorrichtung (11) einer Scheibenbremse (1) nach einem der vorhergehenden Ansprüche, vorzugsweise druckluftbetätigt, insbesondere für ein Kraftfahrzeug, mit einer Zuspannvorrichtung, vorzugsweise mit einem Bremsdrehhebel (9), mindestens einer Spindeleinheit (5, 5') mit jeweils einem Gewindestempel (6, 6'), wobei die Verschleißnachstellvorrichtung (11), mit der Zuspannvorrichtung, vorzugsweise mit dem Bremsdrehhebel (9), gekoppelt ist, **gekennzeichnet durch** die folgenden Verfahrensschritte:

    (S1) Ermitteln von Parametern, mittels derer eine Aussage über den aktuellen Verschleiß von Bremsbelägen (3) und einer zugehörigen Bremsscheibe (2) der Scheibenbremse (1) getroffen werden kann, während eines Bremsvorgangs und Abschätzen eines Verschleißes der Bremsbeläge (3) und der Bremsscheibe (2) der Scheibenbremse (1) anhand der ermittelten Parameter während des Bremsvorgangs;
    (S2) Vergleichen des so geschätzten Verschleißes mit einem Referenzwert und Festlegen einer Anzahl von Bremsbetätigungen, wenn der Referenzwert erreicht oder überschritten wird; und
    (S3) Betätigen der Scheibenbremse (1) entsprechend der festgelegten Anzahl von Bremsbetätigungen zum Betreiben der Verschleißnachstellvorrichtung (11) mit einer hohen Nachstellgeschwindigkeit.

15. Verfahren nach Anspruch 14, **dadurch gekennzeichnet, dass** im Verfahrensschritt (S3) eine Zuspannkraft der Scheibenbremse (1) derart gewählt wird, dass die Ansprechkraft der Scheibenbremse (1) gerade erreicht wird.

16. Verfahren nach Anspruch 14 oder 15, **dadurch gekennzeichnet, dass** der Verfahrensschritt (S3) schon beim Lösen der Scheibenbremse (1) während des Bremsvorgangs, in dem der erste Verfahrensschritt (S1) durchgeführt worden ist, durchgeführt wird.

17. Verfahren nach einem der Ansprüche 14 bis 16, **dadurch gekennzeichnet, dass** das Abschätzen eines Verschleißes der Bremsbeläge (3) und der Bremsscheibe (2) der Scheibenbremse (1) im Verfahrensschritt (S1) mittels eines Schätzverfahrens durchgeführt wird.

18. Verfahren nach Anspruch 17, **dadurch gekennzeichnet, dass** das Schätzverfahren mit einem Algorithmus durchgeführt wird.

**Claims**

1. Disc brake (1), actuated preferably by way of compressed air, in particular for a motor vehicle, having an application apparatus, preferably with a brake rotary lever (9), at least one spindle unit (5,5') with one threaded plunger (6, 6') each, and at least one wear-compensating readjustment apparatus (11) with a readjustment device (11a) for readjustment for compensating for friction surface wear on brake pads (3) and brake disc (2) of the disc brake (1), wherein the readjustment device (11a) is coupled at the drive input side to the application apparatus, preferably to the brake rotary lever (9), by way of a drive (10) with an actuator (9b), and is coupled at the drive output side to the at least one spindle unit (5, 5') of the disc brake (1), wherein the actuator (9b) has an actuation contour (9c) which is arranged on the actuator (9b) at an angle (α) and which engages with a contour section (15b) of a drive input element (15a) of the readjustment device (11a), **characterised in that** the readjustment device (11a) comprises:

   a) the drive input element (15a), axially on both sides of which there is arranged a rolling body arrangement each, of which one is in the form of a rolling bearing (15d) and one is in the form of a ball ramp clutch (15) with a freewheel (16);
   b) a thrust element (17) which is coupled to the ball ramp clutch (15) and which, with a section of the ball ramp clutch (15), forms an overload clutch (16c);
   c) a drive output element (18) which is coupled to the thrust element (17) and which serves for coupling to a coupling gear (20a) which is designed for coupling to the spindle unit (5, 5');
   d) a force store element (19) for generating a preload force of the ball ramp clutch (16) and of the overload clutch (16c); and
   e) a support body (13) which is connected at one end to a bearing disc (12) and around which the drive input element (15a), the rolling body arrangements (15d, 15, 16), the overload clutch (16c), the drive output element (18) and the force store element (19) are arranged axially in series with the bearing disc (12), wherein the force store element (19) is arranged between a rest section (13d) of the support body (13) and the thrust element (17).

2. Disc brake according to claim 1, **characterised in that** the actuator (9b) and the actuation contour (9c) form an L shape, wherein the angle (α) is approximately 90°.

3. Disc brake according to claim 1 or 2, **characterised in that** the actuator (9b) is in the form of a lever with a lever arm (h1) which extends parallel to the readjustment device (11a) from a pivot axis (9e) of the application apparatus to the drive input element (15a) of the readjustment device (11a) and which is arranged closely adjacent to the readjustment device (11a), wherein the actuation contour (9c) has a lever arm (h2) which extends from the end of the lever arm (1) to a readjustment means axis (5a) of the readjustment device (11a).

4. Disc brake according to claim 3, **characterised in that** the lever arm (h1) of the actuator (9b) and the lever arm (h2) of the actuation contour (9c) form a transmission ratio (i) between the application apparatus and the readjustment device (11a) with the following relationship: i = h1/h2, wherein the lever arm (h1) is configured with a maximal length, and the lever arm (h2) has a minimal length.

5. Disc brake according to any of the preceding claims, **characterised in that** the support body (13) of the readjustment device (11a) is of sleeve-shaped form, wherein the interior of the support body (13) is configured for receiving a threaded plunger (6, 6') of a spindle unit (5, 5') of the associated disc brake (1).

6. Disc brake according to claim 5, **characterised in that** the support body (13) of the readjustment device (11a) has a bearing section (13a) and a receiving section (13c) which are connected via a shoulder (13b), wherein the bearing section (13a) has a smaller outer diameter than the receiving section (13c).

7. Disc brake according to claim 6, **characterised in that** another end of the receiving section (13c) is in the form of a rest section (13d) for the force store element (19).

8. Disc brake according to any of the preceding claims, **characterised in that** the drive output element (18) is of sleeve-shaped form with two cylindrical sections (18a, 18c).

9. Disc brake according to claim 8, **characterised in that** the two cylindrical sections (18a, 18c) of the drive output element (18) have different diameters and are connected via a shoulder section (18b), wherein one cylindrical section, as a drive output coupling section (18a), has a larger diameter than the other cylindrical section, which is in the form of a drive output section (18c) for coupling to the coupling gear (20a).

10. Disc brake according to claim 9, **characterised in that** the force store element (19) is arranged between the drive output coupling section (18a) of the drive output element (18) and the support body (13).

11. Disc brake according to claim 9 or 10, **characterised in that** the drive output section (18c) of the drive output element (18) extends into an interior space of a coupling gear (20a) and interacts with an internal profile (20d) of the coupling gear (20a) via transmission elements (18d), preferably balls, wherein the coupling gear (20a) has an engagement section (20c) which is provided for interacting non-rotatably with a threaded plunger (6, 6') of the at least one spindle unit (5, 5') of the associated disc brake (1).

12. Disc brake according to claim 11, **characterised in that** the coupling gear (20a) has a synchronisation section (20b) which is provided for coupling to a synchronisation means (20g) of a synchronisation device (20) of the disc brake (1).

13. Disc brake according to any of the preceding claims, **characterised in that** a ramp ring (15f) of the ball ramp clutch (15) and the drive input element (15a) are coupled by means of an elastic coupling element (14), preferably a wrap spring.

14. Method for operating a wear-compensating readjustment apparatus (11) of a disc brake (1) according to any of the preceding claims, actuated preferably by way of compressed air, in particular for a motor vehicle, having an application apparatus, preferably with a brake rotary lever (9), at least one spindle unit (5, 5') with one threaded plunger (6, 6') each, wherein the wear-compensating readjustment apparatus (11) is coupled to the application apparatus, preferably to the brake rotary lever (9), **characterised by** the following method steps:

(S1) determining parameters by means of which a statement can be made regarding the present level of wear of brake pads (3) and of an associated brake disc (2) of the disc brake (1), during a braking operation, and estimating a level of wear of the brake pads (3) and of the brake disc (2) of the disc brake (1) on the basis of the determined parameters during the braking process;
(S2) comparing the thus estimated level of wear with a reference value, and specifying a number of brake actuations if the reference value is reached or exceeded; and
(S3) actuating the disc brake (1) in accordance with the specified number of brake actuations so as to operate the wear-compensating readjustment apparatus (11) with a high readjustment speed.

15. Method according to claim 14, **characterised in that** in method step (S3) an application force of the disc brake (1) is selected such that the response force of the disc brake (1) is just reached.

16. Method according to claim 14 or 15, **characterised in that** the method step (S3) is performed as soon as the disc brake (1) is released during the braking process in which the first method step (S1) was performed.

17. Method according to any of claims 14 to 16, **characterised in that** the estimation of a level of wear of the brake pads (3) and of the brake disc (2) of the disc brake (1) in method step (S1) is performed by way of an estimation method.

18. Method according to claim 17, **characterised in that** the estimation method is performed by way of an algorithm.

## Revendications

1. Frein (1) à disque, de préférence à actionnement par de l'air comprimé, notamment pour un véhicule automobile, comprenant un dispositif de serrage, ayant de préférence un levier (9) tournant de frein, au moins une unité (5, 5') de broche, ayant chacune un mandrin (6, 6') fileté et au moins un système (11) de rattrapage d'usure ayant un dispositif (11a) de rattrapage pour rattraper une usure d'une surface de friction sur des garnitures (3) de frein et un disque (2) de frein du frein (1) à disque, le dispositif (11a) de rattrapage étant accouplé, du côté menant, au dispositif de serrage, de préférence par le levier (9) tournant de frein par l'intermédiaire d'un entraînement (10) ayant un actionneur (9b), et, du côté mené, à la au moins une unité (5, 5') de broches du frein (1) à disque, dans lequel l'actionneur (9b) a un contour (9c) d'actionnement, qui est disposé sur l'actionneur (9b) suivant un angle (α) et est en prise avec un segment (15b) de contour d'un élément (15a) d'entraînement du dispositif (11a) de rattrapage, **caractérisé en ce que** le dispositif (11a) de rattrapage comprend :

a) l'élément (15a) d'entraînement, sur lequel est monté, des deux côtés axialement, respectivement un agencement de corps de roulement, dont l'un est constitué en palier (15d) à roulement et dont l'un est constitué en accouplement (15) à rampe à billes ayant une roue libre (16);

b) un élément (17) d'application d'une pression, qui est accouplé à l'accouplement (15) à rampe à billes et qui forme, avec une partie de l'accouplement (15) à rampe à billes, un accouplement (16c) de surcharge;

c) un élément (18) mené, accouplé à l'élément (17) d'application d'une pression, pour s'accoupler à une roue (20a) d'accouplement, constitué pour un accouplement à l'unité (5, 5') de broche;

d) un élément (19) d'accumulation de force pour produire une force de précontrainte de l'accouplement (15) à rampe à billes et de l'accouplement (16c) de surcharge et

e) un corps (13) de support, qui est relié à une extrémité à un disque (12) de palier et autour duquel axialement, en série avec le disque (12) de palier, l'élément (15a) d'entraînement, les agencements (15d, 15, 16) de corps de roulement, l'accouplement (16c) de surcharge, l'élément (18) mené et l'élément (19) d'accumulation de force sont disposés, l'élément (19) d'accumulation de force étant disposé entre une partie (13d) de support du corps (13) de support et l'élément (17) d'application d'une pression.

2. Frein (1) à disque suivant la revendication 1, **caractérisé en ce que** l'actionneur (9b) et le contour (9c) d'actionnement forment une forme en L, l'angle ($\alpha$) étant d'environ 90°.

3. Frein (1) à disque suivant la revendication 1 ou 2, **caractérisé en ce que** l'actionneur (9b) est constitué sous la forme d'un levier ayant un bras (h1) de levier, qui s'étend, parallèlement au dispositif (11a) de rattrapage, d'un axe (9e) de pivotement du dispositif de serrage à l'élément (15a) d'entraînement du dispositif (11a) de rattrapage et qui est disposé étroitement à côté du dispositif (11a) de rattrapage, le contour (9c) d'actionnement ayant un bras (h2) de levier, qui s'étend de l'extrémité du bras (1) de levier à un axe (5a) de rattrapage du dispositif (11a) de rattrapage.

4. Frein (1) à disque suivant la revendication 3, **caractérisé en ce que** le bras (h1) de levier de l'actionneur (9b) et le bras (h2) de levier du contour (9c) d'actionnement donnent un rapport (i) de transmission entre le dispositif de serrage et le dispositif (11a) de rattrapage, selon la relation suivante i = h1/h2, le bras (h1) de levier étant conçu en ayant une longueur maximum et le bras (h2) de levier en ayant une longueur minimum.

5. Frein (1) à disque suivant l'une des revendications précédentes, **caractérisé en ce que** le corps (13) de support du dispositif (11a) de rattrapage est constitué sous la forme d'un manchon, l'intérieur du corps (13) de support étant conformé pour recevoir un mandrin (6, 6') fileté d'une unité (5, 5') de broche du frein à disque (1) à associer.

6. Frein (1) à disque suivant la revendication 5, **caractérisé en ce que** le corps (13) de support du dispositif (11a) de rattrapage a une partie (13a) de palier et une partie (13c) de réception, qui sont reliées par un épaulement (13b), la partie (13a) de palier ayant un diamètre extérieur plus petit que la partie (13c) de réception.

7. Frein (1) à disque suivant la revendication 6, **caractérisé en ce qu'**une autre extrémité de la partie (13c) de réception est constituée en partie (13d) de support de l'élément (19) d'accumulation de force.

8. Frein (1) à disque suivant l'une des revendications précédentes, **caractérisé en ce que** l'élément (18) mené est conformé en manchon ayant deux parties (18a, 18c) cylindriques.

9. Frein (1) à disque suivant la revendication 8, **caractérisé en ce que** les deux parties (18a, 18c) cylindriques de l'élément (18) mené ont des diamètres différents et sont reliées par une partie (18b) d'épaulement, l'une des parties cylindriques en tant que partie (18) d'accouplement menée ayant un diamètre plus grand que l'autre partie cylindrique, qui est constituée en partie (18c) menée pour l'accouplement à la roue (20a) d'accouplement.

10. Frein (1) à disque suivant la revendication 9, **caractérisé en ce que** l'élément (19) d'accumulation de force est disposé entre la partie (18a) d'accouplement menée de l'élément (18) mené et le corps (13) de support.

11. Frein (1) à disque suivant la revendication 9 ou 10, **caractérisé en ce que** la partie (18c) menée de l'élément (18) mené s'étend dans un espace intérieur d'une roue (20a) d'accouplement et est en coopération avec un profil (20d) intérieur de la roue (20a) d'accouplement, par des éléments (18d) de transmission, de préférence des billes, la roue (20a) d'accouplement ayant une partie (20c) d'engrènement prévue pour la coopération, solidaire en rotation, avec un mandrin (6, 6') fileté de la au moins une unité (5, 5') de broche du frein (1) à disque à associer.

12. Frein (1) à disque suivant la revendication 11, **caractérisé en ce que** la roue (20a) d'accouplement a une partie (20b) de synchronisation prévue pour s'accoupler à un moyen (20g) de synchronisation d'un dispositif (20) de synchronisation du frein (1) à disque.

13. Frein (1) à disque suivant l'une des revendications précédentes, **caractérisé en ce qu'**un anneau (15f) de rampe de l'accouplement (15) à rampe à billes et l'élément (15a) d'entraînement sont accouplés au moyen d'un élément (14) élastique d'accouplement, de préférence au moyen d'un ressort boudin.

14. Procédé pour faire fonctionner un système (11) de rattrapage d'usure d'un frein (1) à disque suivant l'une des revendications précédentes, de préférence à actionnement par de l'air comprimé, notamment pour un véhicule automobile, comprenant un dispositif de serrage, ayant de préférence un levier (9) tournant de frein, au moins une unité (5, 5') de broche, ayant chacune un mandrin (6, 6') fileté, le système (11) de rattrapage d'usure étant accouplé au dispositif de serrage, de préférence par le levier (9) tournant de frein, **caractérisé par** les stades suivants :

(S1) on détermine des paramètres au moyen desquels on peut énoncer une assertion sur l'usure présente de garniture (3) de frein et d'un disque (2) de frein associé du frein (1) à disque, pendant une opération de freinage, et on estime l'usure des garnitures (3) de frein et du disque (2) de frein du frein (1) à disque à l'aide des paramètres déterminés pendant l'opération de freinage;
(S2) on compare l'usure ainsi estimée à une valeur de référence et on fixe un nombre d'actionnements de frein si la valeur de référence est atteinte ou dépassée et
(S3) on actionne le frein (1) à disque, conformément au nombre constaté d'actionnements de frein, pour faire fonctionner le système (11) de rattrapage d'usure à une grande vitesse de rattrapage.

15. Procédé suivant la revendication 14, **caractérisé en ce que**, dans le stade (S3) du procédé, on choisit une force de serrage du frein (1) à disque, qui atteint précisément la force de réponse du frein (1) à disque.

16. Procédé suivant la revendication 14 ou 15, **caractérisé en ce que** l'on effectue le stade (S3) du procédé dès le desserrage du frein (1) à disque pendant l'opération de freinage, dans laquelle le premier stade (S1) du procédé a été effectué.

17. Procédé suivant l'une des revendications 14 à 16, **caractérisé en ce que** l'on effectue l'évaluation de l'usure des garnitures (3) de frein et du disque (2) de frein du frein (1) à disque dans le stade (S1) du procédé, au moyen d'un procédé d'évaluation.

18. Procédé suivant la revendication 17, **caractérisé en ce que** l'on effectue le procédé d'évaluation avec un algorithme.

EP 2 895 761 B1

Fig. 1

22

EP 2 895 761 B1

Fig. 2

23

Fig 3

EP 2 895 761 B1

Fig. 4

# Fig. 4a

Fig 5

EP 2 895 761 B1

Fig. 5a

28

Fig. 6

Fig. 8

100

103

104

105

101

# Fig. 9

S1

S2

S3

Fig. 10

S1

S1.1

S1.2

S1.3

S2

S2.1  n

j

S2.2

S3

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037771 A1
- EP 0614025 A1
- US 2005269171 A1
- DE 102008035366 A1
- DE 19729024 C1